# EUROPEAN PATENT SPECIFICATION

(11) **EP 3 007 453 B1**
(45) Date of publication and mention of the grant of the patent: **08.07.2020**
(21) Application number: 14806802.6
(22) Date of filing: 26.05.2014
(51) Int. Cl.: H04N 21/435, H04H 60/13

(54) **RECEIVING DEVICE, RECEIVING METHOD, TRANSMISSION DEVICE, TRANSMISSION METHOD, AND PROGRAM**
EMPFANGSVORRICHTUNG, EMPFANGSVERFAHREN, SENDEVORRICHTUNG, SENDEVERFAHREN UND PROGRAMM
DISPOSITIF ET PROCÉDÉ DE RÉCEPTION, DISPOSITIF ET PROCÉDÉ D'ÉMISSION, ET PROGRAMME

(30) Priority: 06.06.2013 JP 2013119512
(43) Date of publication of application: 13.04.2016
(73) Proprietor: Sony Corporation, Tokyo 108-0075 (JP)
(72) Inventor: KITAZATO, Naohisa, Tokyo 108-0075 (JP)
(74) Representative: Witte, Weller & Partner Patentanwälte mbB
(86) International application number: PCT/JP2014/063824
(87) International publication number: WO 2014/196398

(56) References cited:
- EP-A2- 0 891 081
- EP-A2- 2 424 267
- WO-A1-2012/161120
- WO-A1-2014/057833
- JP-A- 2011 155 317
- JP-A- 2013 066 160
- Anonymous: "Signalling MHP Applications | www.tvwithoutborders.com", , 26 June 2012 (2012-06-26), XP55244483, Retrieved from the Internet: URL:https://web.archive.org/web/2012062618 4052/http://www.interactivetvweb.org/tutor ials/mhp/application_signalling [retrieved on 2016-01-25]
- AKITSUGU BABA ET AL: "Seamless, Synchronous, and Supportive: Welcome to Hybridcast: An Advanced Hybrid Broadcast and Broadband System", IEEE CONSUMER ELECTRONICS MAGAZINE, IEEE, PISCATAWAY, NJ, USA, vol. 1, no. 2, 1 April 2012 (2012-04-01), pages 43-52, XP011440218, ISSN: 2162-2248, DOI: 10.1109/MCE.2011.2182469
- 'DIGITAL HOSO NI OKERU DATA HOSO FUGOKA HOSHIKI TO DENSO HOSHIKI - ARIB STANDARD, ARIB STD-B24 VERSION 5.1, DATA CODING AND TRANSMISSION SPECIFICATION FOR DIGITAL BROADCASTING' ARIB STD-B24 vol. 3, 14 March 2007, page 15, XP030001552

## Description

### Technical Field

The present technology relates to a receiving device, a receiving method, a transmitting device, a transmitting method, and a program, and particularly, to a receiving device, a receiving method, a transmitting device, a transmitting method, and a program through which an application program that is simultaneously executed with AV content can be provided in hybrid-type broadcast.

### Background Art

In recent years, with the advent of digital television broadcast, data broadcast in a broadcast markup language (BML) scheme has been widely performed. Currently, receivers such as almost all television receivers support data broadcast.

In addition, the introduction of broadcast called hybrid-type broadcast in which communication in addition to broadcast waves is used to access a predetermined server provided on the Internet and thus an application program executed in linkage with AV content of a broadcast program or the like is acquired is also being studied (for example, refer to Patent Literature 1).

In anonymous: "Signalling MHP Applications www.tvwithout borders.com", June 26, 2012, an overview of the actions that have to be performed by an application manager in a receiver before the receiver can actually run an application is given.

WO 2012/161120 A1 relates to an integrated broadcasting communications receiver. The provided device controls the activation of applications associated with sub-channels.

### Citation List

### Patent Literature

Patent Literature 1: JP 2011-66556A

### Summary of Invention

### Technical Problem

Incidentally, for viewers of broadcast programs, data broadcast and hybrid-type broadcast are common in that an application program in linkage with AV content is provided.

On the other hand, the data broadcast is established without an Internet connection and is used to implement a relatively simple function. However, the hybrid-type broadcast needs an Internet connection and is used to implement a relatively high function. It is assumed that these types of broadcast will be provided together in the future and selectively used.

However, in hybrid-type broadcast, a technical scheme for providing an application program that is simultaneously executed with AV content of a broadcast program or the like has yet to be established.

In view of the above-described problems, in the present technology, it is possible to provide an application program that is simultaneously executed with AV content in hybrid-type broadcast.

### Solution to Problem

A receiving device according to a first aspect of the present technology includes: a receiving unit configured to receive AV content; a continuation range information acquisition unit configured to acquire continuation range information for specifying a range on a time axis in which an operation of an application program simultaneously executed with the AV content is able to continue; and a control unit configured to terminate the application program being executed based on the continuation range information, wherein the AV content is transmitted through a broadcast wave and the AV content is a broadcast program, wherein the continuation range information includes information that is included in predetermined information transmitted through the broadcast wave and is used to designate a predetermined event from which it is possible to specify a continuation range of an operation of the application program, wherein the control unit is configured to terminate the application program being executed when a forced termination signal of the application program, which is included in a download info indication, DII, transmitted through data carousel transmission using the broadcast wave, is detected as the designated event of the continuation range information, wherein the control unit is configured to terminate the application program when a change of content of the broadcast program is detected as the designated event, wherein the control unit is configured to terminate the application program when a change of content of data broadcast simultaneously executed with the broadcast program is detected as the designated event, and wherein the control unit is configured to terminate the application program when a change of content of the application program is detected as the designated event.

The AV content is transmitted through a broadcast wave. The continuation range information includes information that is included in predetermined information transmitted through the broadcast wave and is used to designate a predetermined event from which it is possible to specify a continuation range of an operation of the application program.

The control unit terminates the application program being executed when a forced termination signal of the application program transmitted through the broadcast wave is detected as the designated event.

When the application programs are executed, the forced termination signal is detected for each application program being executed.

The control unit terminates the application program being executed in association with the forced termination signal, which is included in a download info indication (DII) transmitted through data carousel transmission using the broadcast wave, for each application program.

The AV content is a broadcast program. The control unit terminates the application program when a change of content of the broadcast program is detected as the designated event.

The control unit terminates the application program being executed when a value of an event identifier included in an event information table (EIT) transmitted through the broadcast wave is updated.

The AV content is a broadcast program. The control unit terminates the application program when a change of content of data broadcast simultaneously executed with the broadcast program is detected as the designated event.

The control unit terminates the application program being executed when a value of an event identifier for data broadcast included in a DII transmitted through data carousel transmission using the broadcast wave is updated.

The control unit terminates the application program when a change of content of the application program is detected as the designated event.

The control unit terminates the application program being executed when a value of an event identifier for an application included in a DII transmitted through data carousel transmission using the broadcast wave is updated.

The control unit terminates the application program being executed when the event is not designated, and when termination of the application program being executed is instructed or when the AV content is switched.

The continuation range information is included in control information for controlling an operation of the application program.

The continuation range information is designated as an argument of a function for activating the application program.

The continuation range information is designated as a parameter of a uniform resource identifier (URI) that is an argument of a function for activating the application program.

A receiving method or a program according to the first aspect of the present technology is a receiving method or a program corresponding to the receiving device according to the first aspect of the present technology.

For the receiving device, the receiving method, and the program according to the first aspect of the present technology, AV content is received, continuation range information for specifying a range on a time axis in which an operation of an application program simultaneously executed with the AV content is able to continue is acquired, and the application program being executed is terminated based on the continuation range information.

A transmitting device according to a second aspect of the present technology includes: a generation unit configured to generate continuation range information for specifying a range on a time axis in which an operation of an application program simultaneously executed with AV content is able to continue; and a transmitting unit configured to transmit the continuation range information.

A transmitting method or a program according to the second aspect of the present technology is a transmitting method or a program corresponding to the transmitting device according to the second aspect of the present technology.

For the transmitting device, the transmitting method, and the program according to the second aspect, continuation range information for specifying a range on a time axis in which an operation of an application program simultaneously executed with AV content is able to continue is generated, and the continuation range information is transmitted.

### Advantageous Effects of Invention

According to the first aspect and the second aspect of the present technology, it is possible to provide an application program that is simultaneously executed with AV content in hybrid-type broadcast.

### Brief Description of Drawings

[FIG. 1] FIG. 1 is a diagram illustrating an exemplary configuration of a broadcast communication linked system.
[FIG. 2] FIG. 2 is a diagram illustrating an exemplary configuration of a transmitting device.
[FIG. 3] FIG. 3 is a diagram illustrating an exemplary configuration of a receiving device.
[FIG. 4] FIG. 4 is a diagram illustrating an exemplary functional configuration of a control unit.
[FIG. 5] FIG. 5 is a diagram for describing an overview of data transmission through data carousel transmission.
[FIG. 6] FIG. 6 is a diagram illustrating a structure of a DSM-CC section for DDB or DII message transmission.
[FIG. 7] FIG. 7 is a diagram illustrating a structure of an EIT.
[FIG. 8] FIG. 8 is a diagram illustrating a basic operation sequence.
[FIG. 9] FIG. 9 is a diagram illustrating continuation range information (application_time_scope) in detail.
[FIG. 10] FIG. 10 is a diagram describing a startAITControlledApp function when continuation range information is designated by arguments.
[FIG. 11] FIG. 11 is a diagram describing a replaceApplication function when continuation range information is designated by arguments.
[FIG. 12] FIG. 12 is a diagram describing a startAITControlledApp function when continuation range information is inserted into a URI of an argument for designation.
[FIG. 13] FIG. 13 is a diagram describing a replaceApplication function when continuation range information is inserted into a URI of an argument for designation.
[FIG. 14] FIG. 14 is a diagram illustrating a detailed configuration of an AIT.
[FIG. 15] FIG. 15 is a diagram illustrating an exemplary description of the AIT.
[FIG. 16] FIG. 16 is a diagram illustrating operation sequences of type 1.
[FIG. 17] FIG. 17 is a diagram illustrating operation sequences of type 2.
[FIG. 18] FIG. 18 is a diagram illustrating operation sequences of type 3.
[FIG. 19] FIG. 19 is a diagram illustrating a data structure of an application forced termination descriptor of type 3.
[FIG. 20] FIG. 20 is a diagram illustrating a data structure of an application forced termination descriptor of a modification scheme of type 3.
[FIG. 21] FIG. 21 is a diagram illustrating operation sequences of a modification scheme of type 3.
[FIG. 22] FIG. 22 is a diagram illustrating operation sequences of type 4.
[FIG. 23] FIG. 23 is a diagram illustrating a data structure of an application event descriptor.
[FIG. 24] FIG. 24 is a flowchart describing a transmission process.
[FIG. 25] FIG. 25 is a flowchart describing a reception process.
[FIG. 26] FIG. 26 is a flowchart describing a data broadcast support process.
[FIG. 27] FIG. 27 is a flowchart describing a continuation range information support process in detail.
[FIG. 28] FIG. 28 is a diagram illustrating an exemplary screen transition when data broadcast and hybrid-type broadcast are provided together.
[FIG. 29] FIG. 29 is a diagram illustrating an exemplary configuration of a broadcast communication linked system according to a second embodiment.
[FIG. 30] FIG. 30 is a diagram illustrating an exemplary configuration of an AIT server.
[FIG. 31] FIG. 31 is a flowchart describing an AIT delivery process.
[FIG. 32] FIG. 32 is a diagram illustrating an exemplary configuration of a broadcast communication linked system according to a third embodiment.
[FIG. 33] FIG. 33 is a diagram describing a method of acquiring a document and an AIT transmitted through data carousel transmission.
[FIG. 34] FIG. 34 is a diagram describing a method of acquiring an AIT and a linked application.
[FIG. 35] FIG. 35 is a diagram illustrating an exemplary configuration of a computer.

### Description of Embodiments

Hereinafter, embodiments of the present technology will be described with reference to the drawings.

### <First embodiment>

### <Exemplary configuration of broadcast communication linked system>

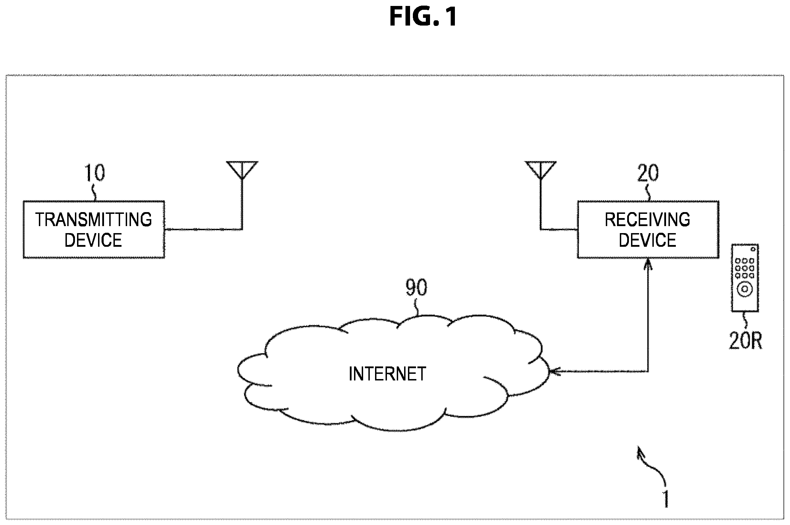

FIG. 1 illustrates an exemplary configuration of a broadcast communication linked system 1. The broadcast communication linked system 1 includes a transmitting device 10 and a receiving device 20.

The transmitting device 10 transmits broadcast content of a broadcast program, CM or the like through a digital television broadcast signal.

In addition, the transmitting device 10 transmits a data broadcast application, an AIT, and a linked application through data carousel transmission.

Here, the data broadcast application is an application program for data broadcast, which is created by a BML document that is written in, for example, Broadcast Markup Language (BML). Also, the data broadcast application is also referred to as broadcast content.

In addition, the application information table (AIT) includes application control information for controlling operations of the linked application. Information, for example, a control command such as "Auto Start" or a uniform resource locator (URL) of an application server to be described below, is described in the AIT.

In addition, the linked application refers to an application program that is executed in linkage with broadcast content. The linked application is created by an HTML document written in, for example, HyperText Markup Language (HTML). The linked application is also referred to as linked content.

The receiving device 20 is a receiver such as a television receiver. The receiving device 20 receives a broadcast signal from the transmitting device 10 and acquires a video and a sound of the broadcast content. The receiving device 20 displays the acquired video on a display, and outputs a sound corresponding to the video through a speaker.

In addition, the receiving device 20 receives a command from a remote controller 20R in response to a user manipulation through infrared rays, and performs various operations such as channel switching according to the command.

For example, a button d that is manipulated while data broadcast is viewed is provided in the remote controller 20R, and the receiving device 20 displays a video of the data broadcast application on the display according to manipulation of the button d. Also, without limitation to the manipulation of the remote controller 20R, viewing of data broadcast may be instructed according to a graphical user interface (GUI) manipulation on a screen of the display.

Further, the receiving device 20 acquires the AIT included in the broadcast signal from the transmitting device 10. Based on the AIT, the receiving device 20 acquires, for example, the linked application that is set to be immediately and automatically executed, through the broadcast signal and immediately executes the application.

Also, the receiving device 20 is capable of accessing the Internet 90 and linked to various servers connected to each other, and executes various processes. For example, when streaming playing of communication content is instructed, the receiving device 20 may access a delivery server (not illustrated) provided on the Internet 90 and perform streaming playing of the communication content delivered from the delivery server. In this case, the linked application is executed in linkage with the communication content. For example, the communication content refers to audio visual (AV) content that is delivered by video on demand (VOD) such as a broadcast program that has been broadcast, a movie that has been published or an original video program. Also, the broadcast content and the communication content are examples of the AV content.

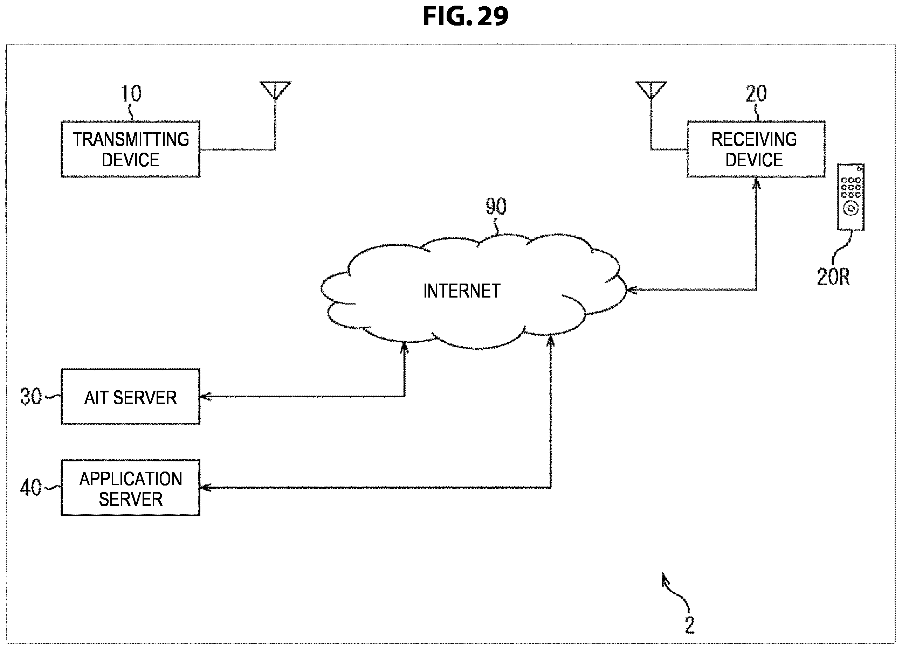

In addition, as will be described in detail below, a dedicated server (an AIT server 30 and an application server 40 to be described below in FIG. 29) connected to the Internet 90 may provide the AIT and the linked application.

Further, while only one receiving device 20 is illustrated in FIG. 1 for simplicity of description, the broadcast communication linked system 1 actually includes a plurality of receiving devices 20, and each of the receiving devices 20 receives broadcast content from the transmitting device 10.

The broadcast communication linked system 1 is configured as described above.

### <Exemplary configuration of transmitting device>

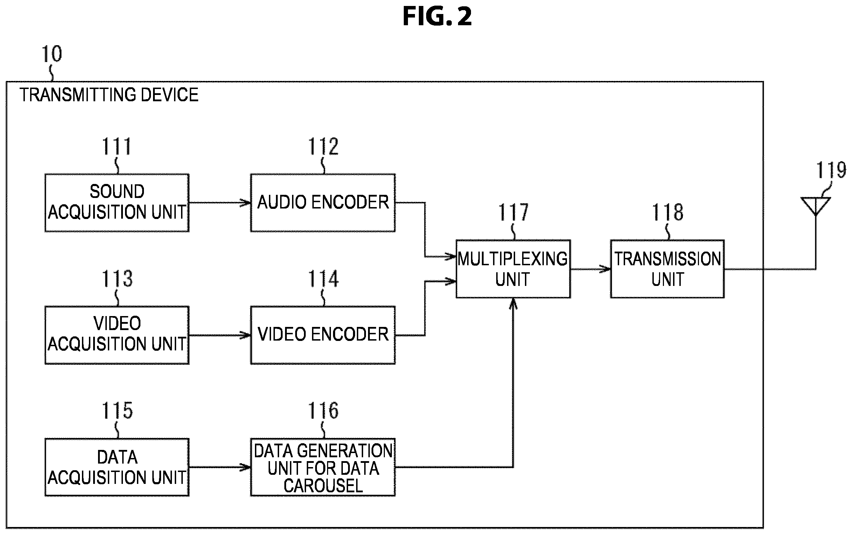

FIG. 2 illustrates an exemplary configuration of the transmitting device 10 of FIG. 1.

As illustrated in FIG. 2, the transmitting device 10 includes a sound acquisition unit 111, an audio encoder 112, a video acquisition unit 113, a video encoder 114, a data acquisition unit 115, a data generation unit for a data carousel 116, a multiplexing unit 117, and a transmitting unit 118.

The sound acquisition unit 111 acquires an audio signal of broadcast content from an external server, a microphone, a recording medium or the like, and supplies the signal to the audio encoder 112.

The audio encoder 112 encodes the audio signal supplied from the sound acquisition unit 111 according to an encoding scheme such as Moving Picture Experts Group (MPEG) 2, and supplies the resulting audio stream to the multiplexing unit 117.

The video acquisition unit 113 acquires a video signal of broadcast content from the external server, a camera, the recording medium or the like, and supplies the signal to the video encoder 114.

The video encoder 114 encodes the video signal supplied from the video acquisition unit 113 according to an encoding scheme such as MPEG2, and supplies the resulting video stream to the multiplexing unit 117.

The data acquisition unit 115 acquires data for generating data for a data carousel that is transmitted through data carousel transmission, and supplies the data to the data generation unit for a data carousel 116. For example, as the data for generation, a BML file or an HTML file, a file for AIT, an image file such as Joint Photographic Experts Group (JPEG) or Portable Network Graphics (PNG) or the like is prepared.

The data generation unit for a data carousel 116 generates data for a data carousel based on the data for generation supplied from the data acquisition unit 115 and supplies the data to the multiplexing unit 117 as section data. However, the data for a data carousel is transmitted through data carousel transmission for each object constituting data called a module.

The multiplexing unit 117 multiplexes the audio stream from the audio encoder 112, the video stream from the video encoder 114, and the section data from the data generation unit for a data carousel 116, and supplies the resulting transport stream to the transmitting unit 118.

In addition, for simplicity of description, although not illustrated, in the multiplexing unit 117, caption data is supplied as necessary and multiplexed in the transport stream. In addition, the transport stream includes section data of PSI/SI to be described below.

The transmitting unit 118 transmits the transport stream supplied from the multiplexing unit 117 through an antenna 119 as a broadcast signal.

The transmitting device 10 is configured as described above.

### <Exemplary configuration of receiving device>

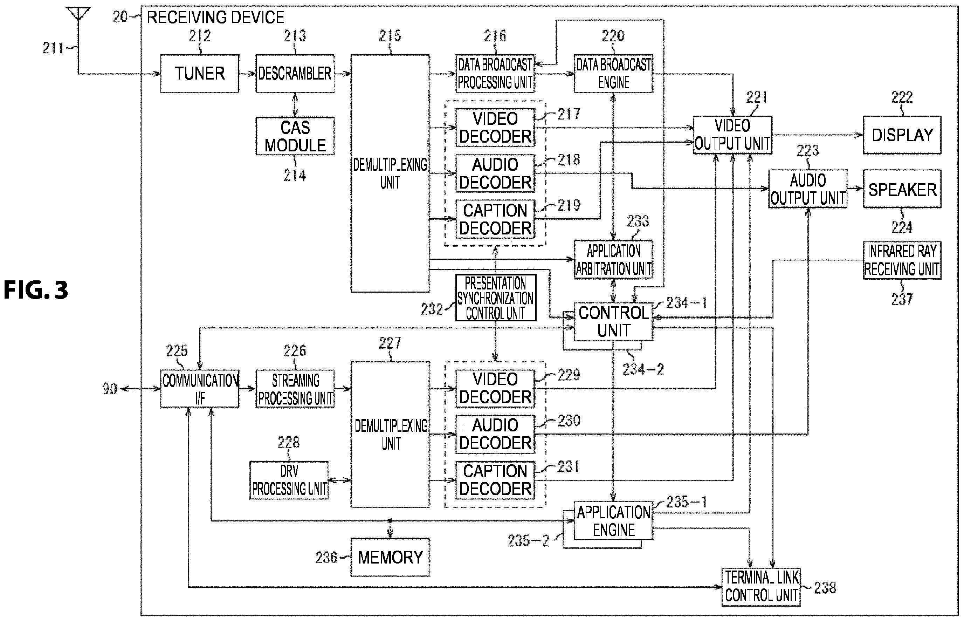

FIG. 3 illustrates an exemplary configuration of the receiving device 20 of FIG. 1.

The receiving device 20 mainly includes a first block configured to implement a receiving and playing function of broadcast content transmitted through broadcast waves of digital television broadcast and a second block configured to implement a receiving and playing function of communication content delivered via the Internet 90.

The first block includes a tuner 212, a descrambler 213, a CAS module 214, a demultiplexing unit 215, a data broadcast processing unit 216, a video decoder 217, an audio decoder 218, a caption decoder 219, and a data broadcast engine 220.

In addition, the second block includes a communication I/F 225, a streaming processing unit 226, a demultiplexing unit 227, a DRM processing unit 228, a video decoder 229, an audio decoder 230, and a caption decoder 231.

In addition, as a unit configured to provide a function common in the first block and the second block, a video output unit 221, a display 222, an audio output unit 223, a speaker 224, a presentation synchronization control unit 232, an application arbitration unit 233, a control unit 234, an application engine 235, a memory 236, an infrared ray receiving unit 237, and a terminal link control unit 238 are provided.

The tuner 212 extracts a broadcast signal of a channel whose tuning is instructed from the broadcast signal received through an antenna 211, demodulates the signal, and supplies the resulting transport stream to the descrambler 213.

The descrambler 213 performs descrambling on the scrambled transport stream supplied from the tuner 212 and supplies the result to the demultiplexing unit 215.

Also, the conditional access system (CAS) module 214 stores information for performing viewing control and contract management of the broadcast content. The descrambler 213 refers to the CAS module 214 and descrambles the transport stream that has been scrambled for reception restriction at a transmission side.

The demultiplexing unit 215 separates the transport stream supplied from the descrambler 213 into a video stream, an audio stream, caption data, and section data. The demultiplexing unit 215 supplies the section data to the data broadcast processing unit 216, the video stream to the video decoder 217, the audio stream to the audio decoder 218 and the caption data to the caption decoder 219 within the separated stream.

The data broadcast processing unit 216 performs various processes on the section data supplied from the demultiplexing unit 215.

Specifically, the data broadcast processing unit 216 performs section filtering on a digital storage media - command and control (DSM-CC) section transmitted through data carousel transmission within the section data. Then, the data broadcast processing unit 216 performs an analyzing process of the resulting download info indication (DII) and download data block (DDB). The data broadcast processing unit 216 supplies data such as the BML document or image data that is obtained as a result of the analyzing process of the DII and DDB and included in the DDB to the data broadcast engine 220 in units of modules. In addition, the data broadcast processing unit 216 appropriately supplies the data obtained as a result of the analyzing process of the DII and DDB to the control unit 234.

Also, data of the data broadcast application is transmitted through data carousel transmission for each object constituting data called a module.

In addition, the broadcast signal includes a section of PSI/SI in addition to the above-described DSM-CC section.

The program specific information (PSI) is information necessary for a system configured to select and receive a specific channel. The PSI includes a PMT. The program map table (PMT) stores each packet ID (PID) of an image, a sound or the like that is included in a certain program. In addition, the service information (SI) is information such as program information, and includes, for example, an EIT. The event information table (EIT) includes information on the broadcast program such as a program name, a broadcast date and time, and broadcast content. However, the EIT may be described as "EIT p/f." "p" of EIT p/f is an initial of "present" and means that information on a present broadcast program is included. In addition, "f" of EIT p/f is an initial of "following" and means that information on a following broadcast program is included.

This information obtained from the section of PSI/SI is appropriately supplied to the control unit 234.

The data broadcast engine 220 controls a BML browser based on data in units of modules supplied from the data broadcast processing unit 216, generates a video signal of the data broadcast application, and supplies the signal to the video output unit 221.

The video decoder 217 decodes the video stream supplied from the demultiplexing unit 215 according to a decoding scheme corresponding to an encoding scheme of the video encoder 114 (FIG. 2), and supplies the resulting video signal to the video output unit 221.

The audio decoder 218 decodes the audio stream supplied from the demultiplexing unit 215 according to a decoding scheme corresponding to an encoding scheme of the audio encoder 112 (FIG. 2), and supplies the resulting audio signal to the audio output unit 223.

The caption decoder 219 decodes the caption data supplied from the demultiplexing unit 215 and supplies the resulting video signal to the video output unit 221.

The video output unit 221 supplies the video signal supplied from the video decoder 217 to the display 222. Therefore, a video of a broadcast program or the like is displayed on the display 222.

In addition, when the video signal is supplied from the caption decoder 219 or the data broadcast engine 220, the video output unit 221 synthesizes this video signal with the video signal from the video decoder 217 and outputs the resulting video signal to the display 222. Therefore, for example, a video in which information on data broadcast such as captions, a weather forecast or the like is overlaid on the broadcast program is displayed on the display 222.

The audio output unit 223 supplies the audio signal supplied from the audio decoder 218 to the speaker 224. Therefore, a sound corresponding to the video of the broadcast program or the like is output from the speaker 224.

The communication I/F 225 receives data of communication content delivered from the delivery server (not illustrated) provided on the Internet 90 under control of the control unit 234, and supplies the data to the streaming processing unit 226.

The streaming processing unit 226 performs various processes necessary for performing streaming playing on the data of communication content supplied from the communication I/F 225 and supplies the resulting data to the demultiplexing unit 227.

The demultiplexing unit 227 separates the data supplied from the streaming processing unit 226 into a video stream, an audio stream, and caption data. The demultiplexing unit 227 supplies the video stream to the video decoder 229, the audio stream to the audio decoder 230 and the caption data to the caption decoder 231 within the separated stream.

Also, the digital rights management (DRM) processing unit 228 performs a process for controlling copyright management or replication restriction of communication content. For example, when communication content whose streaming playing is instructed is encrypted, only the receiving device 20 used by a user having permission from a copyright holder may receive an encryption key, decode encryption, and perform streaming playing.

The video decoder 229 decodes the video stream supplied from the demultiplexing unit 227 and supplies the resulting video signal to the video output unit 221.

The audio decoder 230 decodes the audio stream supplied from the demultiplexing unit 227 and supplies the resulting audio signal to the audio output unit 223.

The caption decoder 231 decodes the caption data supplied from the demultiplexing unit 227 and supplies the resulting video signal to the video output unit 221.

The video output unit 221 supplies the video signal supplied from the video decoder 229 to the display 222. In addition, when the video signal is supplied from the caption decoder 231, the video output unit 221 synthesizes this video signal with the video signal from the video decoder 229, and supplies the resulting video signal to the display 222. Therefore, a video or a caption of a broadcast program or the like that has been broadcast is displayed on the display 222.

The audio output unit 223 supplies the audio signal supplied from the audio decoder 230 to the speaker 224. Therefore, a sound corresponding to the video of the broadcast program or the like that has been broadcast is output from the speaker 224.

The presentation synchronization control unit 232 controls the video decoder 217, the audio decoder 218 and the caption decoder 219 such that the video signal and the audio signal supplied to the video output unit 221 and the audio output unit 223, respectively, are synchronized. In addition, the presentation synchronization control unit 232 controls the video decoder 229, the audio decoder 230, and the caption decoder 231 such that the video signal and the audio signal supplied to the video output unit 221 and the audio output unit 223, respectively, are synchronized.

The application arbitration unit 233 determines an application program having the highest priority of the operation between the data broadcast application and the linked application under control of the control unit 234. The application arbitration unit 233 controls the operation of the data broadcast application by the data broadcast engine 220 based on the determination result. In addition, the application arbitration unit 233 controls the operation of the linked application by the control unit 234 and the application engine 235 based on the determination result.

Also, the application arbitration unit 233 may monitor the demultiplexing unit 215 and determine an application program having the highest priority of the operation between the data broadcast application and the linked application, based on various pieces of information that are separated and obtained from the transport stream.

Here, each of the control unit 234 and the application engine 235 is equal in number to the linked applications that can be activated in the receiving device 20, and two of each are provided in an exemplary configuration of FIG. 3, because it is assumed that two linked applications, a linked application 1 and a linked application 2, are activated. However, when there is no need to distinguish a control unit 234-1 and a control unit 234-2, these are simply described as the control unit 234. In addition, when there is no need to distinguish an application engine 235-1 and an application engine 235-2, these are simply described as the application engine 235.

The control unit 234-1 acquires the linked application 1 transmitted through data carousel transmission based on the AIT supplied from the data broadcast processing unit 216, and supplies the application to the application engine 235-1. The application engine 235-1 controls the operation of the linked application 1 under control of the control unit 234-1.

The control unit 234-2 acquires the linked application 2 transmitted through data carousel transmission and supplies the application to the application engine 235-2 based on the AIT supplied from the data broadcast processing unit 216. The application engine 235-2 controls the operation of the linked application 2 under control of the control unit 234-2.

The application engine 235-1 activates the linked application 1 and controls the operation thereof under control of the control unit 234-1. For example, when the linked application 1 is created by an HTML document written in HyperText Markup Language 5 (HTML5), the application engine 235-1 controls an HTML browser compatible with HTML5, generates a video signal of the linked application 1, and supplies the signal to the video output unit 221. Similarly, the application engine 235-2 supplies a video signal of the linked application 2 to the video output unit 221.

The infrared ray receiving unit 237 receives a command transmitted through wireless communication using infrared rays from the remote controller 20R (FIG. 1), and notifies the control unit 234 of a manipulation signal corresponding to the command. The control unit 234 controls operations of respective units of the receiving device 20 based on the manipulation signal supplied from the infrared ray receiving unit 237.

When an external device (not illustrated) is connected to the receiving device 20, the terminal link control unit 238 controls the communication I/F 225 and performs various processes for linking with the connected external device under control of the control unit 234 and the application engine 235.

The receiving device 20 is configured as described above.

### <Exemplary functional configuration of control unit>

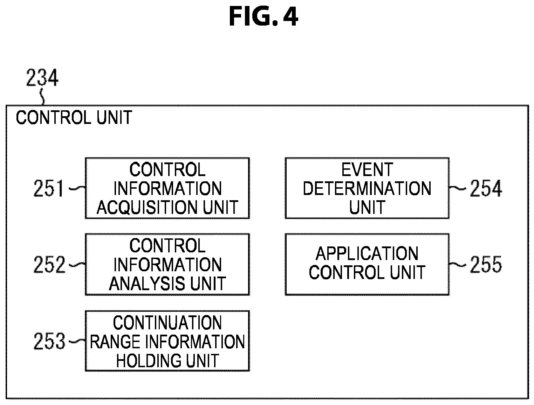

FIG. 4 is a diagram illustrating an exemplary functional configuration of the control unit 234 of FIG. 3.

The control unit 234 includes a control information acquisition unit 251, a control information analysis unit 252, a continuation range information holding unit 253, an event determination unit 254, and an application control unit 255.

The control information acquisition unit 251 controls the data broadcast processing unit 216, acquires the AIT transmitted through data carousel transmission and supplies the AIT to the control information analysis unit 252. In addition, the control information acquisition unit 251 acquires information (hereinafter referred to as "continuation range information") for specifying a range on a time axis in which the operation of the linked application can continue, and supplies the information to the control information analysis unit 252.

The control information analysis unit 252 analyzes the AIT supplied from the control information acquisition unit 251 and supplies the analysis result to the application control unit 255. In addition, the control information analysis unit 252 analyzes the continuation range information supplied from the control information acquisition unit 251, and holds the analysis result in the continuation range information holding unit 253.

The event determination unit 254 performs a process of determining whether an event of terminating the linked application being executed has occurred based on the analysis result of the continuation range information held in the continuation range information holding unit 253 or various signals included in the broadcast signal. The event determination unit 254 supplies the determination result of event occurrence to the application control unit 255.

The application control unit 255 controls the application engine 235 according to the analysis result supplied from the control information analysis unit 252 and controls the operation of the linked application. In addition, the application control unit 255 terminates the linked application being executed according to the determination result supplied from the event determination unit 254.

The control unit 234 is configured as described above.

### <Data transmission through data carousel transmission>

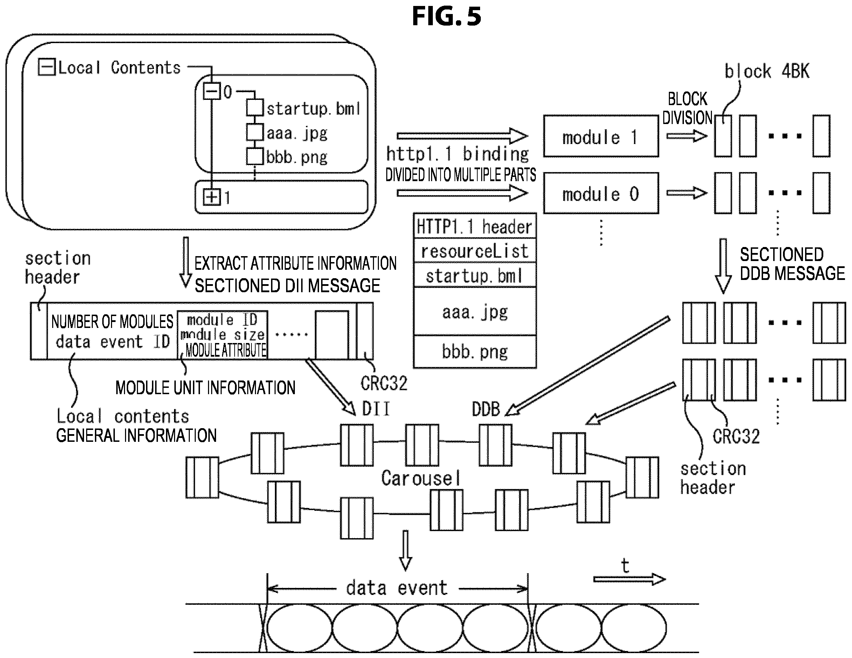

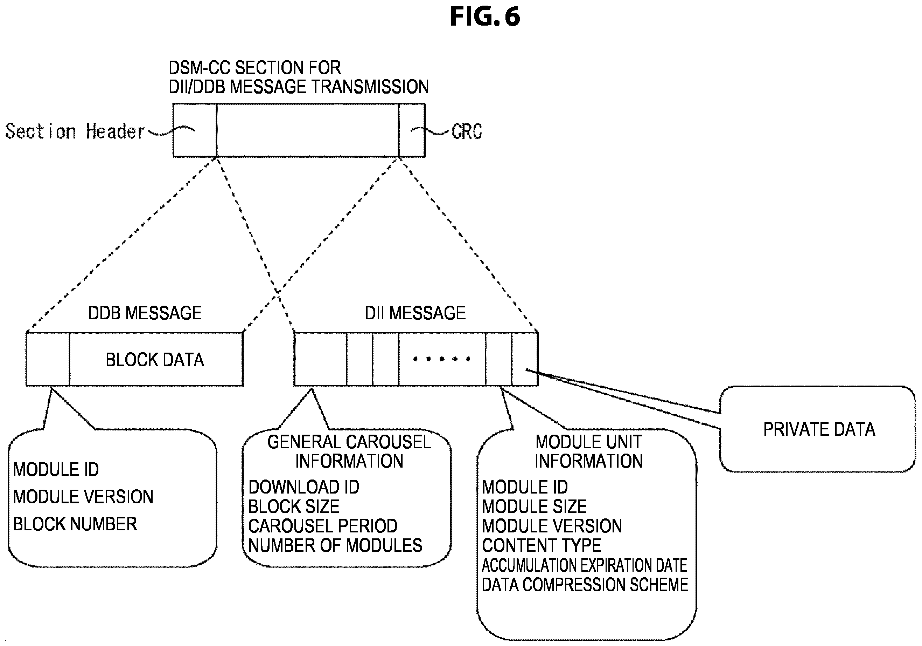

As described above, the data broadcast application, the AIT, and the linked application transmitted from the transmitting device 10 are transmitted through data carousel transmission. Next, data transmission through data carousel transmission will be described with reference to FIGS. 5 and 6. However, here, a case in which the data broadcast application is transmitted through data carousel transmission will be exemplified.

As illustrated in FIG. 5, the data broadcast application includes a collection of image files of JPEG or PNG in addition to a BML file, and these files are managed in units of folders that are stored in a directory structure. When the data broadcast application is transmitted through data carousel transmission, a file group of a transmission target is divided into multiple parts in units of virtual folders.

In addition, two types of messages, the download data block (DDB) in which actual data of the data broadcast application is included and the download info indication (DII) in which directory information of the DDB is stored, are mainly used in data carousel transmission.

The DDB corresponds to each block of the module and is assigned a block number. The receiving device 20 arranges the acquired data blocks in the order of the block number and thus rebuilds the module. The DII shows index information of the transmission target in the data carousel. In addition, information on a plurality of modules can be described in one DII. When the DII is received, the receiving device 20 recognizes a configuration of the module.

As conceptually illustrated in FIG. 5, since the blocked module is cyclically transmitted through data carousel transmission, the receiving device 20 acquires the DDB based on the DII, and rebuilds a target module. Also, although a delivery order of the DDB and the DII is arbitrary, since the DII stores data corresponding to index information, it is delivered at a relatively high frequency.

FIG. 6 is a diagram illustrating a structure of a DSM-CC section for DDB or DII message transmission of FIG. 5.

As illustrated in the upper part of FIG. 6, the DSM-CC section includes a section header, a payload part, and a CRC part. Each block of the above-described module is stored in the payload part. In the section header, table identification information, a section length, a table identification extension, version information, and section information are stored.

In the table identification information, information indicating whether a target section is a DDB message or a DII message is described. The section length shows a size of the section excluding fields of the table identification information and the section length itself. Meanings of the table identification extension, the version information and the like are different according to a value of the table identification information. The section information stores a section number and the last section number.

The CRC part refers to a check code for verifying whether TS packets constituting the target section are correctly collected in order and is used for an error correction process by a cyclic redundancy check.

In addition, in the lower part of FIG. 6, structures of the DDB message and the DII message are illustrated.

When the target section is the DDB message, the payload part includes information indicating a module ID, a module version, and a block number other than block data.

In the module ID, identification information of a module included in the DDB is described. In the module version, the version information of the module included in the DDB is described. In addition, in the block number, a number of each block of the module included in the DDB is described.

In addition, when the target section is the DII message, the payload part includes general carousel information that is information about general transmission through data carousel transmission, module unit information that is information of each module, and private data.

The general carousel information includes a download ID, a block size, a carousel period, and the number of modules. In the download ID, identification information of all data transmitted in the DDB is described. A part of a bit configuration of the download ID is referred to as a data event ID (data_event_id). A size of each block is described in the block size. In addition, in the carousel period, a transmission period is described. In the number of modules, the number of modules to be transmitted is described.

In the module unit information, as information for each module, a module ID, a module size, a module version, a content type, an accumulation expiration date, and a data compression scheme are included. In the module ID, identification information of a module transmitted in the DDB is described. In the module size, a size of the module transmitted in the DDB is described. In the module version, the version information of the module transmitted in the DDB is described. Then, in the content type, the accumulation expiration date, and the data compression scheme, a type of a file, an accumulation period, and a data compression scheme are described, respectively.

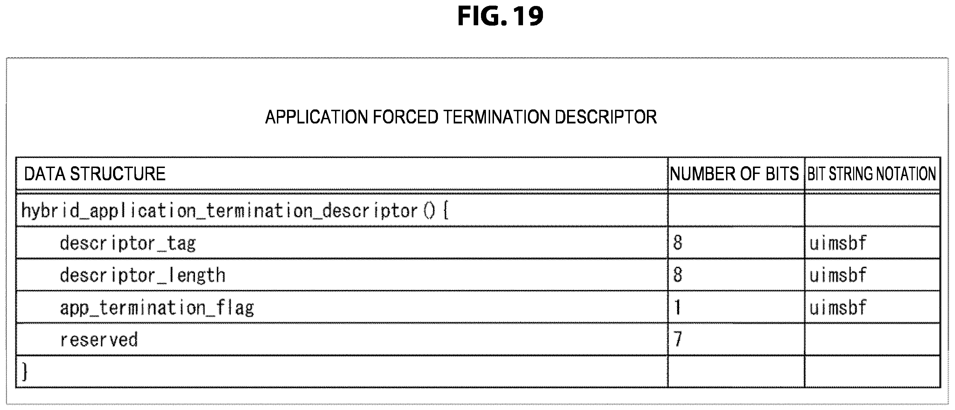

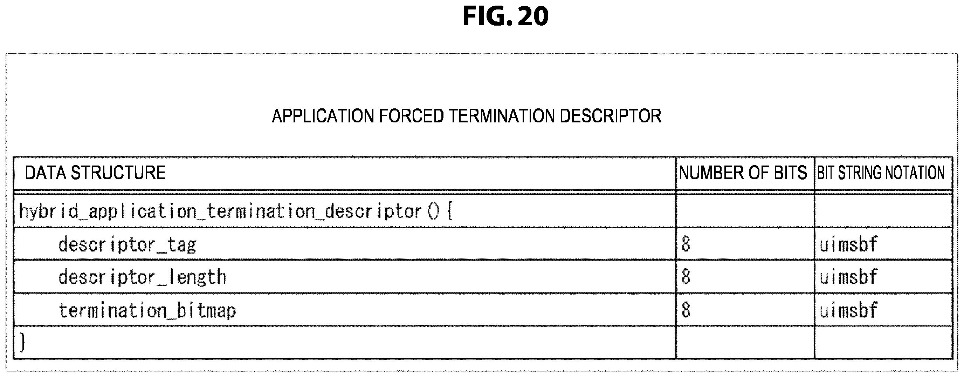

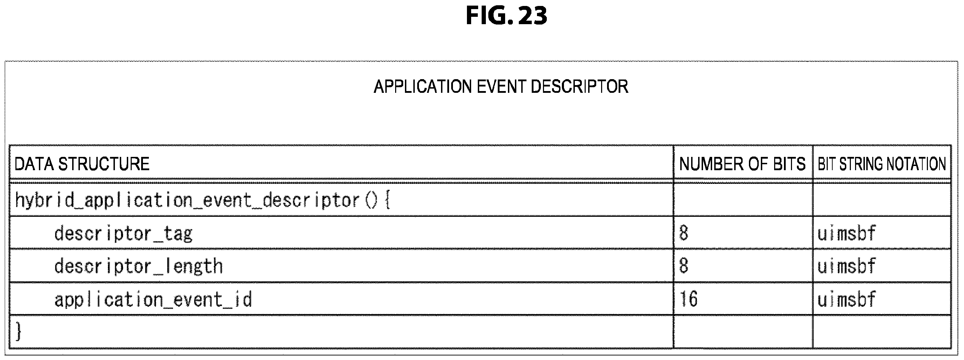

In a private data area (private_data), various descriptors can be arranged. For example, in the private data area, an application forced termination descriptor (FIGS. 19 and 20) or an application event descriptor (FIG. 23) to be described below is arranged.

In the transmitting device 10, the section data is further divided, and stored in a plurality of consecutive TS packets and transmitted. In addition, in data carousel transmission, the data broadcast application is cyclically transmitted in units of blocks (sections).

On the other hand, in the receiving device 20, the TS packet from the transmitting device 10 is received, the received TS packet is used to restore section data, and the restored section data is used to rebuild an original module. Then, in the receiving device 20, the data broadcast application is restored based on a module specified by the module ID.

The data transmission through data carousel transmission has been described above.

### <Structure of EIT>

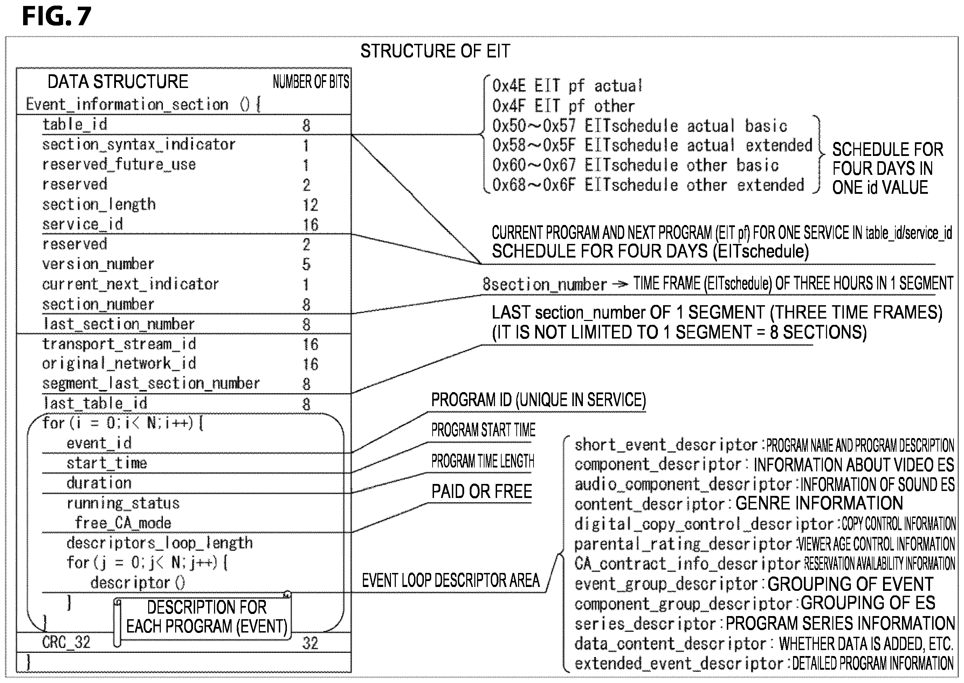

Next, the structure of the EIT will be described with reference to FIG. 7.

Identification information of EIT is described in table_id. In addition, "1" is described in section syntax_indicator.

The section length of the EIT is described in section_length. In addition, service_id of a target program is described in service_id.

The version information is described in version number. "1" is described in current_next_indicator. A section number is described in section_number. A section maximum number is described in last section number.

transport_stream_id indicates transport_stream_id of a transport stream of a target. In addition, in original_network_id, network_id of an original distribution system is described. In segment_last_section_number, the last section_number of the section is described. In last_table_id, the last table_id is described.

In a loop, event id, start_time, duration, running_status, free_CA_mode, and a descriptor loop are described.

In event_id, event_id of a target event is described. In addition, in start_time, a program start time of the target event is described. In duration, a program length of the target event is described. Further, in running_status, "0" (undefined) is entirely described. In free_CA_mode, "0" is set when the program is a free program and "1" is set when the program is a paid program.

In descriptors_loop_length, a loop length of the descriptor loop is described. In descriptor (), as illustrated in FIG. 7, a descriptor such as short_event_descriptor or component_descripto or information is described.

The structure of the EIT has been described above.

### <Basic operation sequence>

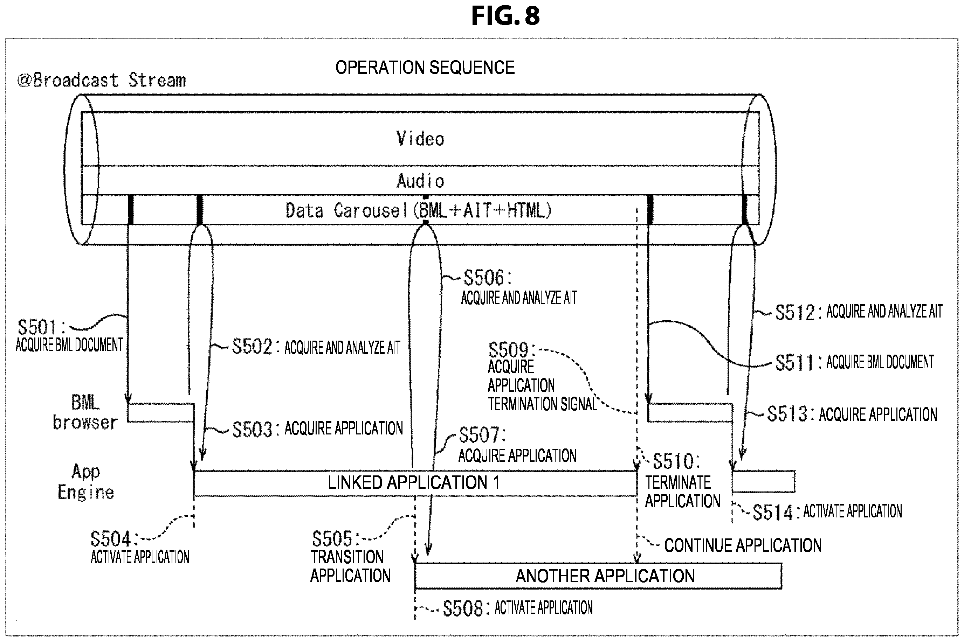

FIG. 8 is a diagram illustrating operation sequences of the receiving device 20.

As illustrated in FIG. 8, in a broadcast stream (transport stream), a video stream, an audio stream, and section data are multiplexed.

Within the section data, in the DSM-CC section transmitted through data carousel transmission, the DSM-CC section for DII message transmission is included.

In the receiving device 20, while the broadcast content is viewed, the BML document transmitted through data carousel transmission is acquired (S501). Therefore, the data broadcast application is executed.

In addition, in the receiving device 20, while the broadcast content is viewed, when activation of the linked application 1 is instructed according to a user manipulation based on the data broadcast application, the AIT transmitted through data carousel transmission is acquired and analyzed (S502).

In the receiving device 20, according to the analysis result of the AIT, the linked application 1 transmitted through data carousel transmission is acquired and activated (S503 and S504). In addition, when the linked application 1 is activated, the data broadcast application is terminated. Also, the linked application 1 may be automatically activated in linkage with the data broadcast application.

Then, in the receiving device 20, when execution of the linked application 1 continues and a termination signal of the linked application 1 included in the broadcast signal is acquired (S509), the linked application 1 being executed is terminated (S510).

In addition, in the linked application 1 being executed, when a transition to another application is instructed (S505), the AIT transmitted through data carousel transmission is acquired and analyzed (S506). Then, in the receiving device 20, according to the analysis result of the AIT, another application transmitted through data carousel transmission is acquired and activated (S507 and S508). Also, in FIG. 8, although the operation of the linked application 1 seems to continue even after another application is activated in S505, when S505 occurs and another application is activated, the linked application 1 may be terminated. On the other hand, when S505 does not occur, the linked application 1 is terminated in S509.

Then, in the receiving device 20, similarly to the above-described case, a termination signal of the linked application 1 is acquired (S509). However, another application does not respond to the termination signal, and continues execution without change.

In addition, in the receiving device 20, again, the BML document is acquired (S511), and the data broadcast application is executed. Also, when activation of the linked application 2 is instructed, the AIT is acquired and analyzed (S512). Then, in the receiving device 20, according to the analysis result of the AIT, the linked application 2 is acquired and executed (S513 and S514). Then, the linked application 2 is terminated when a termination signal of the linked application 2 is acquired.

The operation sequences of the receiving device 20 have been described above.

### <Transmission scheme of continuation range information>

The continuation range information can be transmitted from the transmitting device 10 to the receiving device 20 according to various transmission schemes. As exemplary transmission schemes, the information can be transmitted by describing it in the AIT, by designating it as an argument of an activation function of the linked application, or designating it as a parameter of a uniform resource identifier (URI) that is an argument of an activation function of the linked application. Hereinafter, the transmission scheme of the continuation range information will be described.

### (Continuation range information)

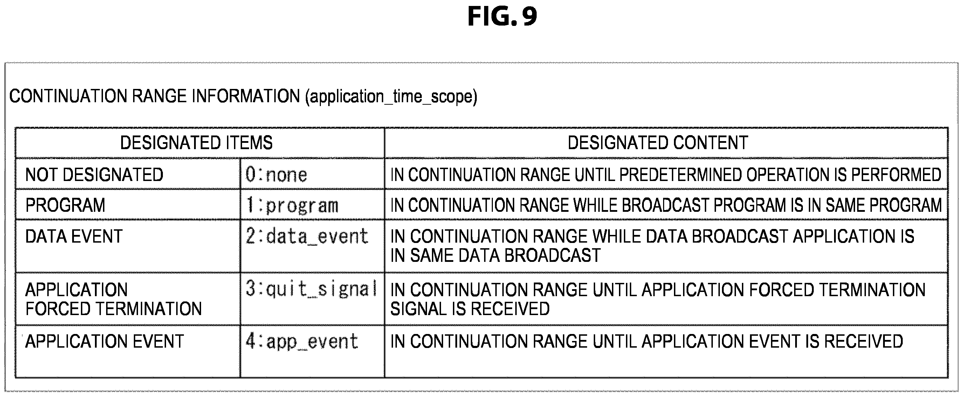

FIG. 9 is a diagram illustrating continuation range information (application_time_scope) in detail.

The continuation range information is information for specifying a range on a time axis in which the operation of the linked application can continue. In the continuation range information, a program (1: program), a data event (2: data event), application forced termination (3: quit signal), or an application event (4: app_event) is designated. However, the continuation range information is not designated in some cases (0: none).

If the program is designated as the continuation range information, when the broadcast program is in the same program, since it is in a continuation range of the linked application, in the meantime, execution of the linked application continues. Then, when the program is changed to another program and thus content of the broadcast program is changed, the operation of the linked application is terminated. It is determined whether the program is in the same program according to, for example, whether a value of event_id included in EIT p is changed. Also, when the program is designated, "1" or "program" is designated.

If the data event is designated as the continuation range information, when the data broadcast application is in the same data broadcast, since the program is in the continuation range of the linked application, in the meantime, execution of the linked application continues. Then, when other data broadcast is changed and thus content of the data broadcast is changed, the operation of the linked application is terminated. It is determined whether the broadcast is the same according to, for example, whether a value of data_event_id of the DII transmitted through data carousel transmission is changed. Also, when the data event is designated, "2" or "data_event" is designated.

If the application forced termination is designated as the continuation range information, since it is in the continuation range of the linked application until an application forced termination signal is detected, in the meantime, execution of the linked application continues. Then, the operation of the linked application is terminated when the application forced termination signal is detected. Detection of the application forced termination signal is determined according to whether app_termination_flag of the application forced termination descriptor (FIG. 19) is set when the DII transmitted through data carousel transmission is updated. Also, when the application forced termination is designated, "3" or "quit signal" is designated.

If the application event is designated as the continuation range information, since it is in the continuation range of the linked application until a change of the application event is detected, in the meantime, execution of the linked application continues. Then, when the change of the application event is detected and content of the application is changed, the operation of the linked application is terminated. Detection of the change of the application event is determined, for example, according to whether a value of app_event_id of the application event descriptor (FIG. 23) is changed when the DII transmitted through data carousel transmission is updated. Also, when the application event is designated, "4" or "appevent" is designated.

Also, when the continuation range information is not designated, or when "0" or "none" is designated as the continuation range information, since it is in the continuation range of the linked application until a predetermined operation is performed, in the meantime, execution of the linked application continues. Then, when the predetermined operation is performed, the operation of the linked application is terminated. For example, when termination of the linked application being executed is instructed or when a channel of the broadcast program is switched, the linked application being executed is terminated

In addition, the above-described types of the continuation range information are only examples, and other types corresponding to a range on a time axis in which the operation of the linked application can continue can be designated. In addition, when only one type of the continuation range information is used, since type information is unnecessary, only "0" or "1" may be designated. For example, when only application forced termination is used, it may be assumed that linked application forced termination is designated if "1" is designated, and the continuation range information is not designated if "0" is designated.

Also, in this specification, a description of "application time scope" is abbreviated as "app_time_scope" in some parts, but both represent the continuation range information.

### (Designation scheme 1: designating information as an argument of an activation function)

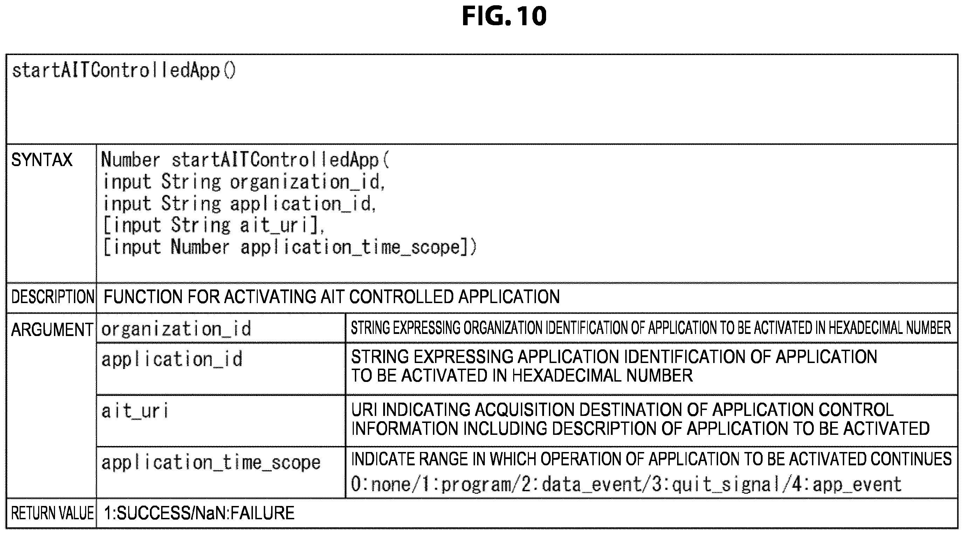

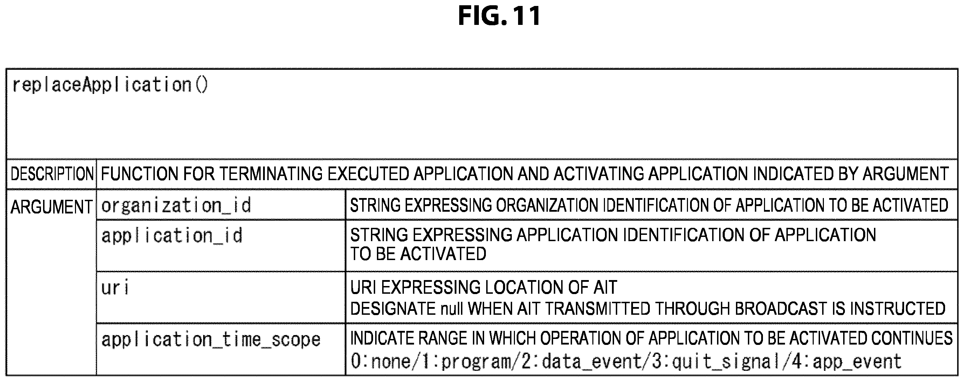

Next, with reference to FIGS. 10 and 11, the designation scheme 1 in which the above-described continuation range information is designated as arguments of an activation function will be described.

FIG. 10 is a diagram describing a startAITControlledApp function.

The startAITControlledApp function is a function that is defined for the BML document and is a function for activating an application controlled by the AIT, that is, the linked application. In the startAITControlledApp function, organization_id, application_id, ait_uri, and application_time_scope can be designated as arguments thereof.

In organization_id, a string expressing organization identification of the linked application to be activated is designated in a hexadecimal number. However, a character (string) indicating hexadecimal notation such as "0x" of a head or "h" of a tail is not included.

In application _id, a string expressing application identification of the linked application to be activated is designated in a hexadecimal number. Similarly to organization id, a character (string) indicating hexadecimal notation such as "0x" of a head or "h" of a tail is not included.

In ait_uri, a URI indicating an acquisition destination of the AIT including a description of the linked application to be activated is designated. However, ait_uri can be omitted. When ait_uri is omitted, in a service at the present moment, the AIT that is transmitted through the section or the carousel and monitored by the receiving device 20 is designated.

In application_time_scope, the continuation range information for specifying a range on a time axis in which the operation of the linked application can continue is designated. In the continuation range information, a program (1: program), a data event (2: data event), application forced termination (3: quit signal), or an application event (4: app_event) is designated. However, the continuation range information is not designated in some cases (0: none).

In addition, as a return value of the startAITControlledApp function, "1" indicates success, and "NaN (Not a Number)" indicates failure.

In this manner, in the startAITControlledApp function, when application_time_scope is designated as an argument thereof, a range on a time axis in which the operation of the linked application to be activated can continue can be designated.

FIG. 11 is a diagram describing a replaceApplication function.

The replaceApplication function is a function that is defined for the HTML document and is a function for terminating an executed application and activating an application indicated by the argument. In the replaceApplication function, as an argument thereof, organization_id, application_id, uri, or application_time_scope can be designated.

In organization _id, application id, and uri, the same content as that of the startAITControlledApp function of FIG. 10 is designated.

In addition, in application_time_scope, similarly to the startAITControlledApp function of FIG. 10, the continuation range information is designated. As the continuation range information, a program (1: program), a data event (2: data event), application forced termination (3: quit signal), or an application event (4: app event) is designated. However, the continuation range information is not designated in some cases (0: none).

In this manner, in the replaceApplication function, when application_time_scope is designated as an argument thereof, a range on a time axis in which the operation of the linked application to be activated can continue can be designated.

As described above, in the designation scheme 1, when application_time_scope is designated as the argument of the activation function, the continuation range information is designated.

### (Designation scheme 2: designating information by inserting it into a URI of an argument of an activation function)

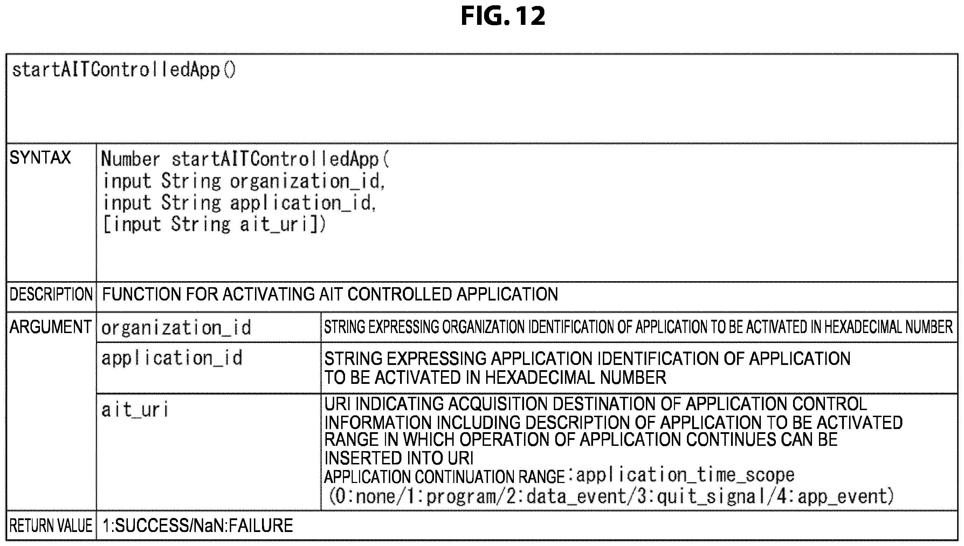

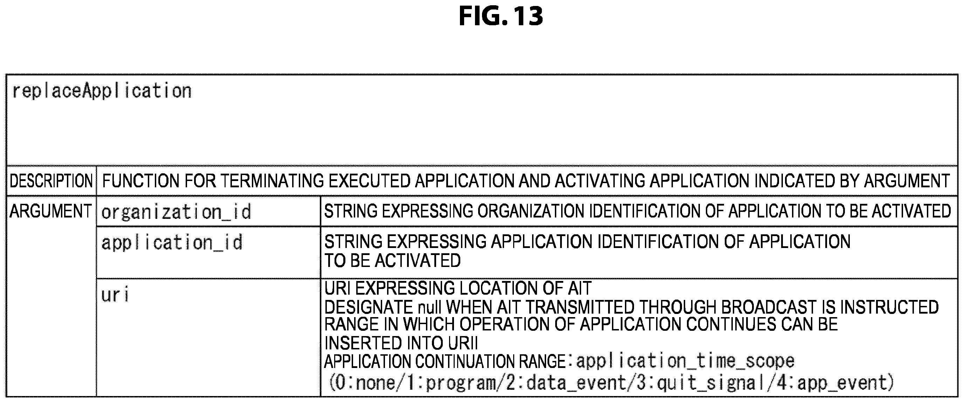

Next, with reference to FIGS. 12 and 13, the designation scheme 2 in which the above-described continuation range information is inserted into the URI that is an argument of the activation function for designation will be described.

FIG. 12 is a diagram describing a startAITControlledApp function.

The startAITControlledApp function of FIG. 12 is the same as in FIG. 10 except that application_time_scope is not included as an argument thereof, and only organization_id, application_id, and_ait_uri can be designated as arguments.

In ait_uri, a URI indicating an acquisition destination of the AIT including a description of the linked application to be activated is designated. In addition, here, as ait_uri, for example, when "arib-dc://7fff/default.ait?app_time_scope=1" is designated, app_time_scope can be inserted into the URI. In this example, the program is designated as the continuation range information.

In this manner, in the startAITControlledApp function, when app_time_scope is inserted into the URI that is an argument thereof, a range on a time axis in which the operation of the linked application to be activated can continue can be designated based on the URI.

FIG. 13 is a diagram describing a replaceApplication function.

The replaceApplication function of FIG. 13 is the same as in FIG. 11 except that app_time_scope is not included as an argument thereof, and only organization_id, application_id, and uri can be designated as arguments.

In uri, similarly to the startAITControlledApp function of FIG. 12, app_time_scope is inserted into a URI indicating an acquisition destination of the AIT including a description of the linked application to be activated.

In this manner, in the replaceApplication function, when app_time_scope is inserted into the URI that is an argument thereof, a range on a time axis in which the operation of the linked application to be activated can continue can be designated based on the URI.

As described above, in the designation scheme 2, when application_time_scope is inserted into the URI that is an argument of the activation function, the continuation range information is designated.

### (Designation scheme 3: designating information as a control parameter of an AIT)

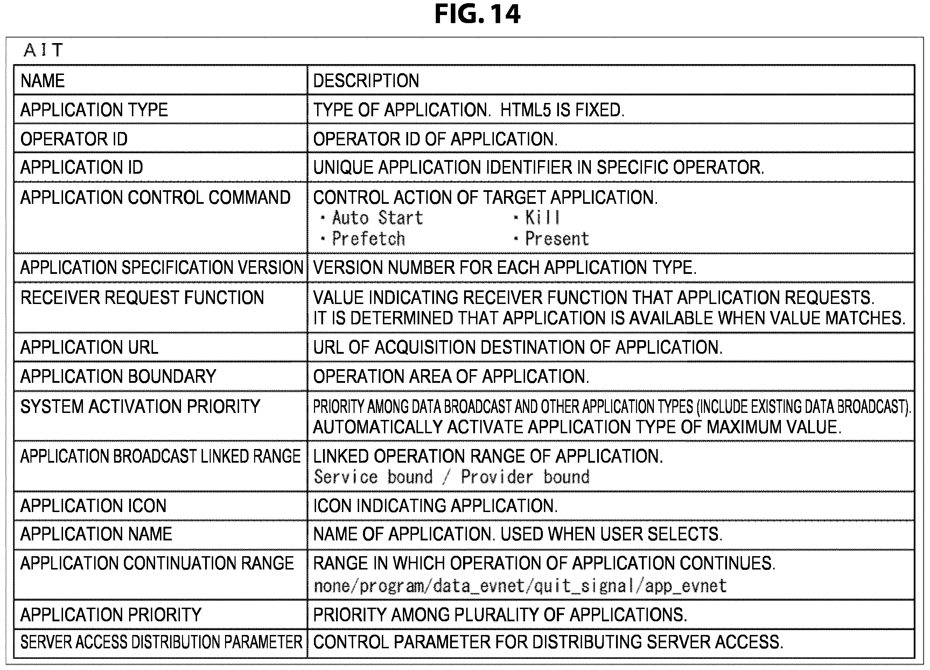

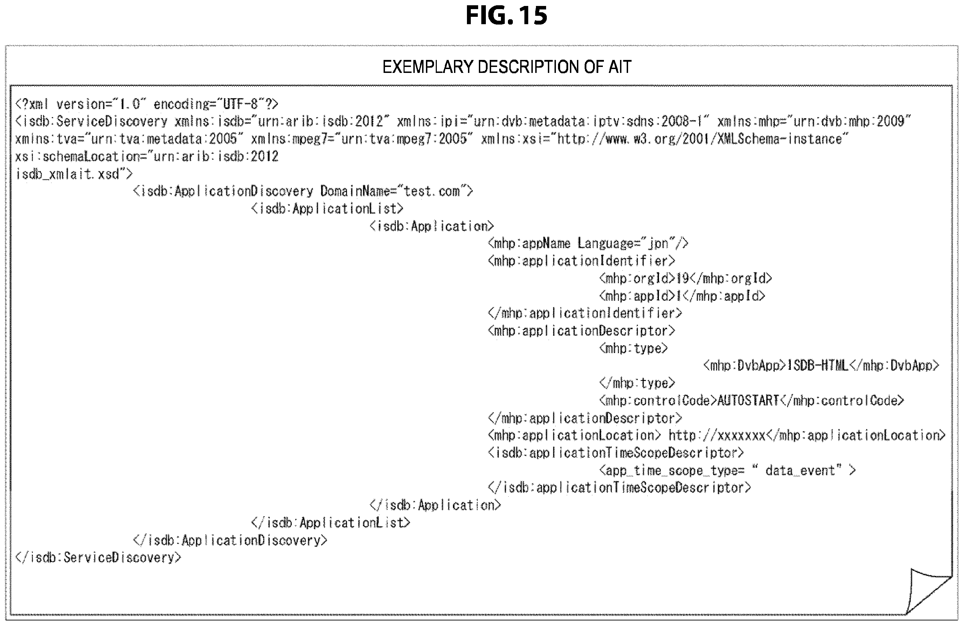

Next, with reference to FIGS. 14 and 15, the designation scheme 3 in which the above-described continuation range information is designated as the control parameter of the AIT will be described.

FIG. 14 is a diagram describing items described in the AIT.

As illustrated in FIG. 14, in the AIT, an application type, an operator ID, an application ID, an application control command, an application specification version, a receiver request function, an application URL, an application boundary, a system activation priority, an application broadcast linked range, an application icon, an application name, an application continuation range, an application priority, and a server access distribution parameter are described.

In the application type, a type of the linked application is described. In the type, for example, HTML5 is fixed and designated.

In the operator ID, identification information of an operator who provides the linked application is described.

In the application ID, identification information of the linked application, which is unique for a specific operator, is described. That is, when the application ID is used in combination with the above-described operator ID, it is possible to uniquely identify the linked application.

In the application control command, a control action of a target linked application is described. In the control command, a designated operation such as "AutoStart," "Kill," "Prefetch," or "Present" is described.

Here, the term "AutoStart" refers to a command for automatically and immediately executing the linked application. The term "Kill" refers to a command for terminating the linked application.

In addition, the term "Prefetch" refers to a command for acquiring the linked application. The term "Present" refers to a command for automatically executing the linked application.

In the application specification version, version information for each application type described above is described.

In the receiver request function, a profile value indicating a function that the linked application requests from the receiving device 20 is described. That is, when the receiving device 20 includes the function described in the profile value, it is determined that the linked application is available.

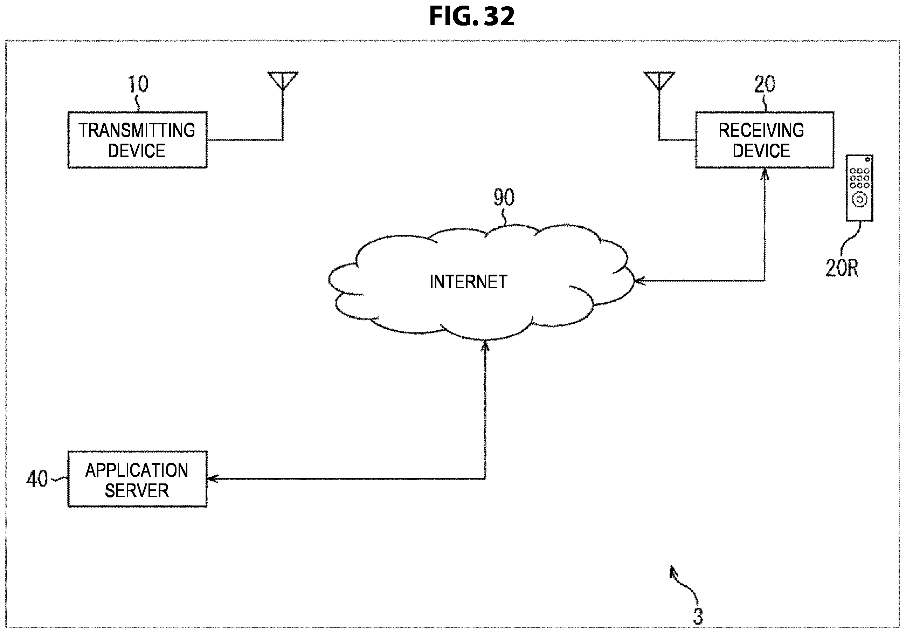

In the application URL, an acquisition destination URL of the linked application is described. That is, in the application URL, a URL of the application server 40 to be described below (FIGS. 29 and 32) is designated.

In the application boundary, an operation range of the linked application is described. The operation range is designated by boundary information.

For example, in the boundary information, when a specific domain is designated as an operation range of the linked application and is in a range of the designated domain, the operation of the linked application is allowed. However, here, a domain of the acquisition destination URL of the linked application described in the above-described application URL can be set as the boundary information.

In the system activation priority, information indicating a priority among a type of the linked application 1, a type of the data broadcast application and a type of the linked application 2 when the linked application 1 is activated by AutoStart is described. The receiving device 20 activates an application program of a type whose value indicating a priority is a maximum value between the data broadcast application and the linked application.

In the application broadcast linked range, a linked operation range of the linked application is described. The linked operation range is designated as a bind type.

For example, when a service bound is designated as the bind type, the linked application is operated in linkage with a range designated as within a predetermined service. In addition, when a provider bound is designated, the linked application is operated in linkage with a range designated as belonging to the same broadcaster.

In the application icon, an icon indicating the target linked application is designated.

In the application name, a name of the target linked application is described. For example, when both the linked application 1 and the linked application 2 can be activated, names of these linked applications are presented to a user, and thus it is possible to selectively activate one of the linked applications.

In the application continuation range, the continuation range information (application_time_scope) for specifying a range on a time axis in which the operation of the linked application can continue, which was described with reference to FIG. 9, is described. As described above, in the continuation range information, a program (1: program), a data event (2: data event), application forced termination (3: quit signal), or an application event (4: app event) is designated. However, the continuation range information is not designated in some cases (0: none).

In the application priority, a priority within the same application type is described. For example, in the application priority, a value indicating an application program that is prioritized among application programs of a plurality of documents having an HTML5 format is designated.

In the server access distribution parameter, a control parameter for distributing a command application timing and distributing access to the application server 40 to be described below (FIGS. 29 and 32) is described.

Also, in the AIT, the application type, the operator ID, the application ID, the application control command, and the application URL are necessary items. In addition, items other than these items are conditional or completely optional items.

The items described in the AIT have been described above.

Next, with reference to FIG. 15, an exemplary description of the AIT will be described. Also, in the example of FIG. 15, a case in which a data event (data_event) is designated as the continuation range information will be described.

As illustrated in FIG. 15, the AIT is described as an extensible markup language (XML) document. In a head of the XML document, information on an XML declaration or namespace is described. Therefore, when "isdb" is described as a prefix, it means that a tag is specified by an Integrated Services Digital Broadcasting (ISDB) standard. When "mhp" is described, it means that a tag is specified by a digital video broadcasting (DVB) standard.

In an ApplicationDiscovery DomainName element, an ApplicationList element in which one or a plurality of Application elements can be described is described. In each of the Application elements, control information for controlling the operation of the linked application is described.

In the Application element, an appName element, an applicationIDentifier element, an applicationDescriptor element, an applicationLocation element, and an applicationTimeScopeDescriptor element are described.

In the appName element, as a Language attribute, "jpn" indicating that a language of the linked application is Japanese is designated.

In the applicationIDentifier element, an orgId element and an appId element are described. In the orgId element, "19" indicating the operator ID is described. In the appId element, "1" indicating the application ID is described. That is, the linked application is uniquely identified in combination of the application ID of "1" and the operator ID of "19."

In the applicationDescriptor element, a type element and a controlCode element are described. In the type element, a DvbApp element is described, and "ISDB-HTML" indicating an HTML document specified by an ISDB standard is described. In the controlCode element, "AUTOSTART" indicating a control command is described.

In the ApplicationLocation element, "http://xxxxxxx" indicating an application URL is described. That is, a URL of the application server 40 to be described below (FIGS. 29 and 32) is http://xxxxxxx.

In the applicationTimeScopeDescriptor element, an app_time_scope_type attribute for designating the continuation range information is described. In the app_time_scope_type attribute, "data_event" is designated, and a data event is designated as the continuation range information.

As described above, when the data event is designated as the continuation range information, in the AIT, "data_event" is designated as the app_time_scope_type attribute in the applicationTimeScopeDescriptor element.

Also, in the example of FIG. 15, since a case in which the data event is designated as the continuation range information is illustrated, "data_event" is designated as the app_time_scope_type attribute. However, when the program is designated, "program" is designated, when the application forced termination is designated, "quit_signal" is designated, or when the application event is designated, "appevent" is designated. In addition, when the continuation range information is not designated, "none" is designated or the applicationTimeScopeDescriptor element is not described.

In addition, in the present embodiment, since there is only one linked application that is simultaneously activated, only one Application element is described in the ApplicationList element. In addition, since the AIT is not used for control such as termination of the linked application, only "AUTOSTART" for immediately executing the linked application is described in the controlCode element.

The exemplary description of the AIT has been described above.

Also, a method of describing the AIT is arbitrary and is not limited to the XML document described in FIG. 15. Other description methods can be used.

As described above, in the designation scheme 3, when the app_time_scope_type attribute is described as the control parameter of the AIT, the continuation range information is designated.

### <Operation sequences for each piece of continuation range information>

As described above, in the continuation range information, a program (1: program), a data event (2: data event), application forced termination (3: quit signal), or an application event (4: app_event) is designated. According to the designated continuation range information, a timing at which the linked application is terminated differs. Therefore, hereinafter, operation sequences of the receiving device 20 when each piece of continuation range information is designated are illustrated and a timing at which the linked application is terminated for each piece of continuation range information will be described.

However, in the following description, as the continuation range information, when the program is designated, it is referred to as "type 1" and when the data event is designated, it is referred to as "type 2." In addition, as the continuation range information, when the application forced termination is designated, it is referred to as "type 3" and when application event is designated, it is referred to as "type 4."

### (Operation sequences of type 1)

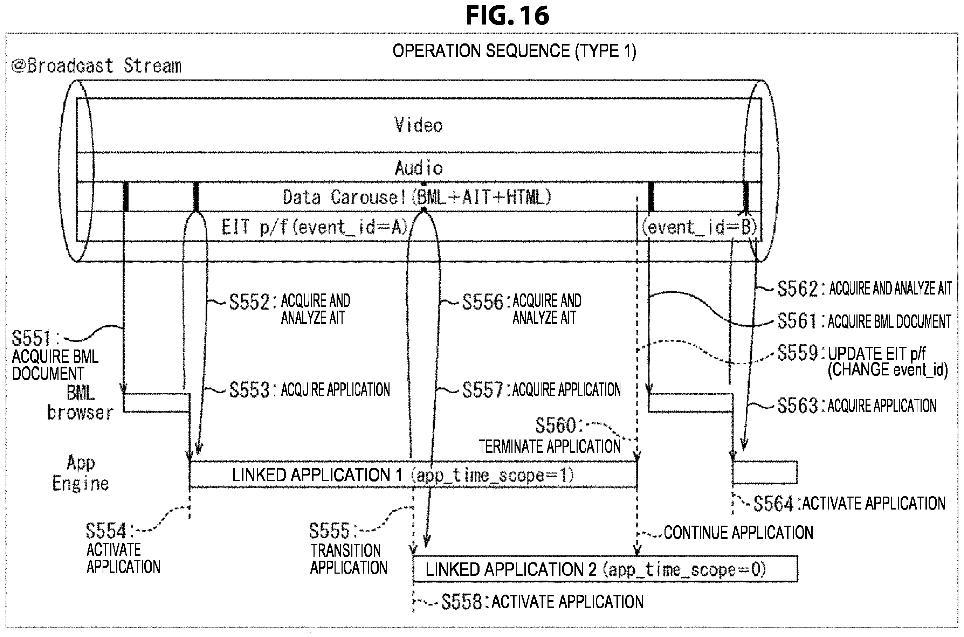

FIG. 16 is a diagram illustrating operation sequences of type 1.

As illustrated in FIG. 16, in a broadcast stream (transport stream), a video stream, an audio stream, and section data are multiplexed.

In the section data, a section of PSI/SI is included. In EIT p included in the SI section, event_id is described. Event_id is identification information of a target event and is uniquely assigned in the same broadcast program (service).

In the receiving device 20, while the broadcast content is viewed, the BML document transmitted through data carousel transmission is acquired (S551). Therefore, the data broadcast application is executed.

In addition, in the receiving device 20, while the broadcast content is viewed, when activation of the linked application 1 is instructed according to a user manipulation, the AIT transmitted through data carousel transmission is acquired and analyzed (S552).

In the receiving device 20, according to the analysis result of the AIT, the linked application 1 transmitted through data carousel transmission is acquired and activated (S553 and S554). In addition, in the linked application 1, "1" is designated as app_time_scope, that is, the program is designated. The continuation range information is designated in one of the designation schemes 1 to 3 described above.

Also, when the linked application 1 is activated, the data broadcast application is terminated. In addition, the linked application 1 may be automatically activated in linkage with the data broadcast application.

Then, in the receiving device 20, execution of the linked application 1 continues. In this case, since the program is designated as the continuation range information, the receiving device 20 constantly monitors a value of event_id included in EIT p that is transmitted by the SI section, and detects a changing point of the value of event_id. Also, a value of event_id of a comparison target of the changing point is, for example, a value of event_id that is acquired and held when the linked application 1 is activated.

Then, when EIT p/f is updated and the value of event_id is changed from "A" to "B," in the receiving device 20, if the changing point of the value of event_id is detected (S559), the linked application 1 being executed in which app_time_scope of "1" is designated and is terminated (S560).

In addition, in the linked application 1 being executed, when a transition to the linked application 2 is instructed (S555), the AIT transmitted through data carousel transmission is acquired and analyzed (S556). Then, in the receiving device 20, according to the analysis result of the AIT, the linked application 2 transmitted through data carousel transmission is acquired and activated (S557 and S558). In addition, in the linked application 2, "0" is designated as app_time_scope, that is, the continuation range information is not designated. The continuation range information is designated in one of the designation schemes 1 to 3 described above.

Then, in the receiving device 20, execution of the linked application 2 of continues. Then, similarly to the above-described case, EIT p/f is updated and the changing point of the value of event_id is detected (S559). However, in the linked application 2, since "0" is designated as app_time_scope, even if the value of event_id is updated, it is not recognized as a termination timing and execution continues.

That is, in the receiving device 20, when the broadcast program is in the same program, execution of the linked application 1 continues. When the broadcast program is terminated, the linked application 1 is also terminated. In addition, when termination is instructed or when a channel of the broadcast program is switched, the linked application 2 is terminated.

In addition, in the receiving device 20, again, the BML document is acquired (S561), and the data broadcast application is executed. In addition, when activation of the linked application 3 is instructed, the AIT is acquired and analyzed (S562). Then, in the receiving device 20, according to the analysis result of the AIT, the linked application 3 is acquired and activated (S563 and S564). When "1" is designated as app_time_scope, the linked application 3 is terminated when the changing point of the value of event_id is detected.

The operation sequences of type 1 have been described above.

### (Operation sequences of type 2)

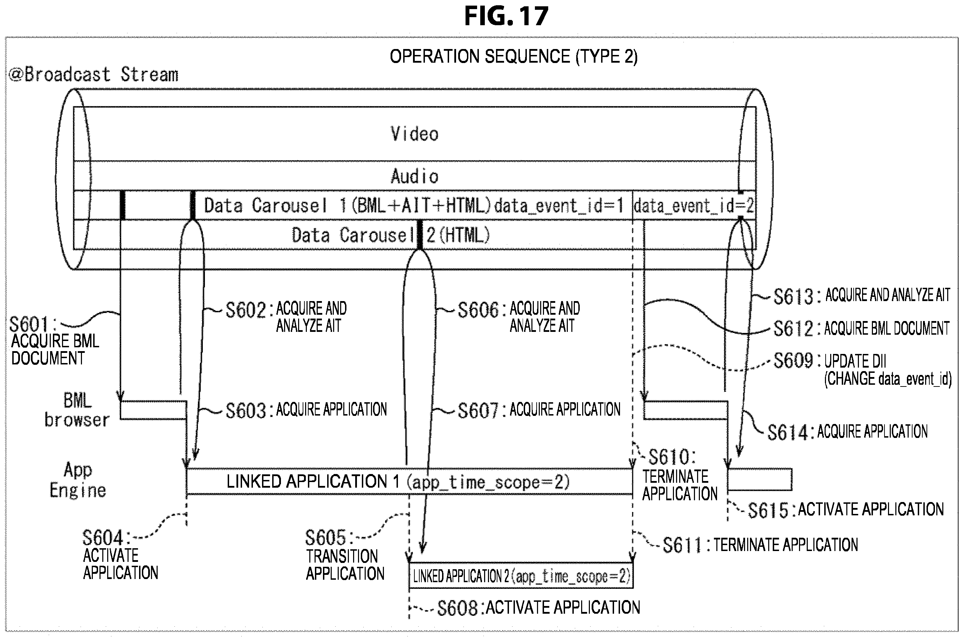

FIG. 17 is a diagram illustrating operation sequences of type 2.

As illustrated in FIG. 17, in a broadcast stream (transport stream), a video stream, an audio stream, and section data are multiplexed. In the example of FIG. 17, there are a plurality of data carousel transmissions. In a data carousel 1, a BML file, an HTML file, and an AIT file are transmitted. In addition, in a data carousel 2, an HTML file is transmitted. For example, the receiving device 20 specifies data carousel transmission of a target according to an attribute value of a component tag attribute of a data_event element described in the AIT.

In addition, within the section data, in the DSM-CC section transmitted through data carousel transmission, the DSM-CC section for DII message transmission is included. In addition, in the download ID included in the payload part of the DII message, data_event_id is described.

That is, the download ID serves as a label for uniquely identifying a carousel, and when a DII is delivered based on an operation of the data event according to a specification of an encoding scheme or the like, data_event_id is described.

data_event_id is identification information for distinguishing data events that use an event message and are temporally adjacent to each other and preventing the event message from being misdelivered between the data broadcast applications that are delivered in these data events. Therefore, different identification information is assigned to the data broadcast applications adjacent to each other at the time of delivery.

In the receiving device 20, while the broadcast content is viewed, the BML document transmitted through data carousel transmission is acquired (S601). Therefore, the data broadcast application is executed.

In addition, in the receiving device 20, while the broadcast content is viewed, when activation of the linked application 1 is instructed according to a user manipulation, the AIT transmitted through data carousel transmission is acquired and analyzed (S602).

In the receiving device 20, according to the analysis result of the AIT, the linked application 1 transmitted through data carousel transmission is acquired and activated (S603 and S604). In addition, in the linked application 1, "2" is designated as app_time_scope, that is, the data event (data_event) is designated. The continuation range information is designated in one of the designation schemes 1 to 3 described above.

Then, in the receiving device 20, execution of the linked application 1 continues. In this case, since the data event is designated as the continuation range information, the receiving device 20 constantly monitors a value of data_event_id included in a DII that is transmitted by the DSM-CC section and detects a changing point of the value of data_event_id. Also, a value of data_event_id of a comparison target of the changing point is, for example, a value of data_event_id that is acquired and held when the linked application 1 is activated.

Then, when the DII is updated and the value of data_event_id is changed from "1" to "2," in the receiving device 20, if the changing point of the value of data_event_id is detected (S609), the linked application 1 being executed is terminated (S610).

In addition, in the linked application 1, when a transition to the linked application 2 is instructed (S605), the AIT transmitted through data carousel transmission is acquired and analyzed (S606). Then, in the receiving device 20, according to the analysis result of the AIT, the linked application 2 transmitted through data carousel transmission is acquired and activated (S607 and S608). In addition, in the linked application 2, "2" is designated as app_time_scope, that is, the data event (data_event) is designated. The continuation range information is designated in one of the designation schemes 1 to 3 described above.

Then, in the receiving device 20, execution of the linked application 2 continues. Then, when the DII is updated and the changing point of the value of data_event_id is detected (S609), the linked application 2 being executed is terminated (S611).

That is, in both of the linked application 1 and the linked application 2, "2" is designated as app_time_scope. Therefore, when the changing point of the value of data_event_id is detected, it is recognized as a termination timing for both. Therefore, in the receiving device 20, when the data broadcast application executed in linkage with the broadcast program is in the same data broadcast, execution of the linked applications 1 and 2 continues. When the data broadcast is terminated, the linked applications 1 and 2 are also terminated.

In addition, in the receiving device 20, again, the BML document is acquired (S612), and the data broadcast application is executed. In addition, when activation of the linked application 3 is instructed, the AIT is acquired and analyzed (S613). Then, in the receiving device 20, according to the analysis result of the AIT, the linked application 3 is acquired and activated (S614 and S615). When "2" is designated as app time_scope, the linked application 3 is terminated when the changing point of the value of data_event_id is detected.

The operation sequences of type 2 have been described above.

### (Operation sequences of type 3)

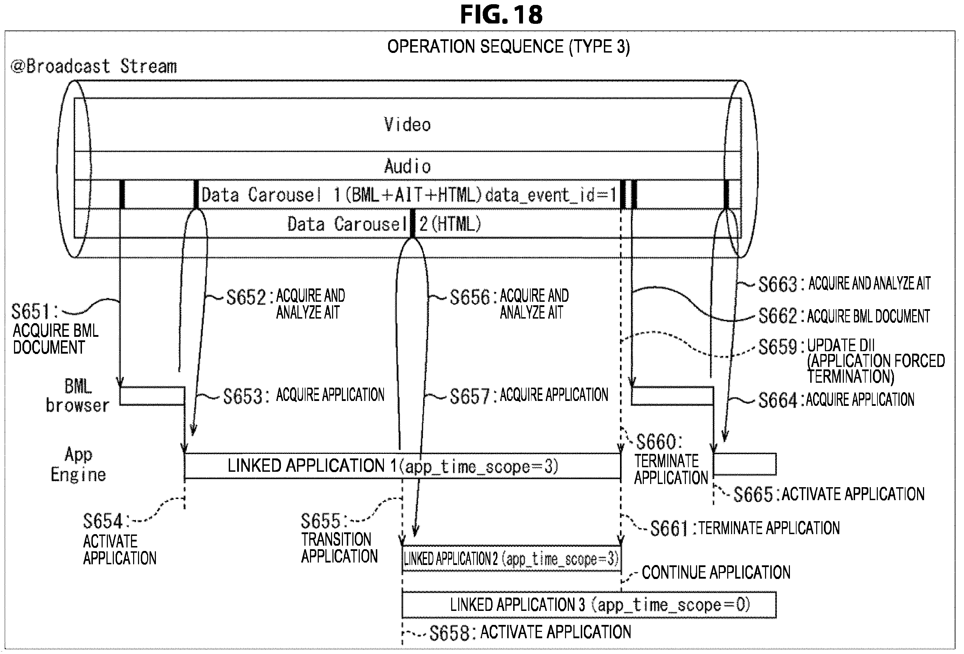

FIG. 18 is a diagram illustrating operation sequences of type 3.

As illustrated in FIG. 18, in a broadcast stream (transport stream), a video stream, an audio stream, and section data are multiplexed. In the example of FIG. 18, there are a plurality of data carousel transmissions. In a data carousel 1, a BML file, an HTML file, and an AIT file are transmitted. In addition, in a data carousel 2, an HTML file is transmitted.

In addition, within the section data, in the DSM-CC section transmitted through data carousel transmission, the DSM-CC section for DII message transmission is included. In addition, in a private data area of the DII message, the application forced termination descriptor (FIG. 19) is arranged.

In the receiving device 20, while the broadcast content is viewed, the BML document transmitted through data carousel transmission is acquired (S651). Therefore, the data broadcast application is executed.

In addition, in the receiving device 20, while the broadcast content is viewed, when activation of the linked application 1 is instructed according to a user manipulation, the AIT transmitted through data carousel transmission is acquired and analyzed (S652).

In the receiving device 20, according to the analysis result of the AIT, the linked application 1 transmitted through data carousel transmission is acquired and activated (S653 and S654). In addition, in the linked application 1, "3" is designated as app_time_scope, that is, the application forced termination (quit signal) is designated. The continuation range information is designated in one of the designation schemes 1 to 3 described above.

Then, in the receiving device 20, execution of the linked application 1 continues. In this case, since application forced termination is designated as the continuation range information, the receiving device 20 constantly monitors the private data area of a DII transmitted through the DSM-CC section and performs a detection process of the application forced termination signal.

Then, when the DII is updated and the application forced termination signal is detected (S659), the linked application 1 being executed is terminated (S660).

In addition, in the linked application 1, when a transition to the linked application 2 is instructed (S655), the AIT transmitted through data carousel transmission is acquired and analyzed (S656). Then, in the receiving device 20, according to the analysis result of the AIT, the linked application 2 transmitted through data carousel transmission is acquired and activated (S657 and S658). In addition, in the linked application 2, "3" is designated as app_time_scope, that is, application forced termination (quit signal) is designated. The continuation range information is designated in one of the designation schemes 1 to 3 described above.

Then, in the receiving device 20, execution of the linked application 2 continues. Then, similarly to the above-described case, when the DII is updated and the application forced termination signal is detected (S659), the linked application 2 being executed is terminated (S661).

Similarly, in the linked application 1, when a transition to the linked application 3 is instructed, according to the analysis result of the AIT, the linked application 3 is acquired and activated (S655 to S658). However, in the linked application 3, "0" is designated as app_time_scope, that is, the continuation range information is not designated. The continuation range information is designated in one of the designation schemes 1 to 3 described above.

Then, in the receiving device 20, execution of the linked application 3 continues. Then, similarly to the above-described case, a DII is updated and the application forced termination signal is detected (S659). However, in the linked application 3, since "0" is designated as app_time_scope, even if the application forced termination signal is detected, it is not recognized as a termination timing and execution continues.

That is, in both of the linked application 1 and the linked application 2, "3" is designated as app_time_scope. Therefore, when the application termination forced signal is detected, it is recognized as a termination timing for both. Therefore, in the receiving device 20, while the application forced termination signal is not detected, execution of the linked applications 1 and 2 continues, and when the application forced termination signal is detected, the linked applications 1 and 2 are terminated. In addition, when termination is instructed or when a channel of the broadcast program is switched, the linked application 3 is terminated.

In addition, in the receiving device 20, again, the BML document is acquired (S662), and the data broadcast application is executed. In addition, when activation of a linked application 4 is instructed, the AIT is acquired and analyzed (S663). Then, in the receiving device 20, according to the analysis result of the AIT, the linked application 4 is acquired and activated (S664 and S665). When "3" is designated as app_time_scope, the linked application 4 is terminated when the application forced termination signal is detected.

Also, the application forced termination signal is transmitted multiple times at a termination timing of the linked application in which "3" is designated as app_time_scope. Therefore, at the receiving device 20 side, even when the application forced termination signal that is transmitted at a certain timing is not detected, it is possible to detect any of the application forced termination signals that are transmitted multiple times. Therefore, it is possible to terminate the linked application certainly.

The operation sequences of type 3 have been described above.

### (Application forced termination descriptor of type 3)

FIG. 19 is a diagram illustrating a data structure of the application forced termination descriptor of type 3.

The application forced termination descriptor (hybrid application termination descriptor) is arranged in, for example, the private data area of the DII message.

As illustrated in FIG. 19, in the application forced termination descriptor of type 3, the following content is described.

In descriptor tag, a tag value assigned in the descriptor is described. In addition, in descriptor length, a descriptor length of the descriptor is described.

app_termination_flag is a flag indicating whether the linked application in which application forced termination is designated as the continuation range information is forcibly terminated. When app_termination_flag has a value of "1," that is, the flag is set, in the receiving device 20, the application forced termination signal is detected and the linked application in which application forced termination is designated as the continuation range information is forcibly terminated.

Also, description content of the application forced termination descriptor of type 3 is arbitrary and is not limited to the exemplary description of FIG. 19.

### (Application forced termination descriptor of modification scheme of type 3)

FIG. 20 is a diagram illustrating a data structure of an application forced termination descriptor of a modification scheme of type 3.

As illustrated in FIG. 20, compared to the application forced termination descriptor of type 3 (FIG. 19), an 8-bit termination_bitmap instead of a 1-bit app_termination_flag is described in the application forced termination descriptor of the modification scheme of type 3.

In termination_bitmap, a bitmap is configured such that each bit of 8 bits is set as a flag indicating whether the linked application in which application forced termination is designated as the continuation range information is forcibly terminated.

Then, in the modification scheme of type 3, as the continuation range information designated in, for example, one of the designation schemes 1 to 3, app_time_scope="3" indicating application forced termination and termination_flag_tag are designated. termination_flag_tag indicates the number of a flag of a bit in order from the most significant bit among 8 bits of termination_bitmap that corresponds to the linked application. Therefore, it is possible to forcibly terminate each linked application at a separate temporal position.

Also, when only application forced termination is designated as the continuation range information and type 3 can be assumed, a type corresponding to a value of 0 to 4 is not designated in app_time_scope, but a value of 0 to 8 can be designated. Then, when "0" is designated, the linked application is not forcibly terminated. When a value of 1 to 8 is designated, the value indicates the number of a flag of a bit in order from the most significant bit among 8 bits of termination_bitmap that corresponds to the linked application. Even in this designation scheme, similarly to the above-described designation scheme, it is possible to forcibly terminate each linked application at a separate temporal position. Also, in the designation scheme, since bits of termination _bitmap can be designated by app_time_scope, there is no need to designate termination_flag_tag.

### (Operation sequences of the modification scheme of type 3)

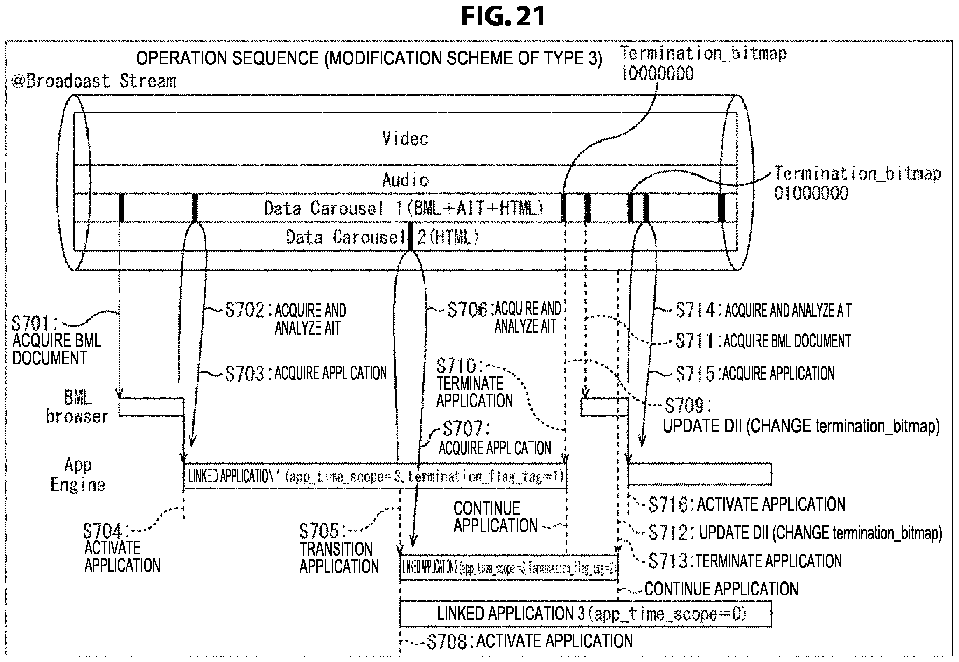

FIG. 21 is a diagram illustrating operation sequences of a modification scheme of type 3.

As illustrated in FIG. 21, in a broadcast stream (transport stream), a video stream, an audio stream, and section data are multiplexed. In the example of FIG. 21, there are a plurality of data carousel transmissions. In a data carousel 1, a BML file, an HTML file, and an AIT file are transmitted. In addition, in a data carousel 2, an HTML file is transmitted.

In addition, within the section data, in the DSM-CC section transmitted through data carousel transmission, the DSM-CC section for DII message transmission is included. In addition, in a private data area of the DII message, the application forced termination descriptor (FIG. 20) is arranged.

In the receiving device 20, while the broadcast content is viewed, the BML document transmitted through data carousel transmission is acquired (S701). Therefore, the data broadcast application is executed.

In addition, in the receiving device 20, while the broadcast content is viewed, when activation of the linked application 1 is instructed according to a user manipulation, the AIT transmitted through data carousel transmission is acquired and analyzed (S702).

In the receiving device 20, according to the analysis result of the AIT, the linked application 1 transmitted through data carousel transmission is acquired and activated (S703 and S704). In addition, in the linked application 1, "3" is designated as app_time_scope, that is, the application forced termination (quit_signal) is designated. Further, "1" is set as termination_flag_tag, that is, the most significant bit among 8 bits of termination_bitmap is set as an termination forced flag of the linked application 1. The continuation range information (app_time_scope, termination_flag_tag) is designated in one of the designation schemes 1 to 3 described above.

Then, in the receiving device 20, execution of the linked application 1 continues. In this case, since application forced termination is designated as the continuation range information, the receiving device 20 constantly monitors the private data area of a DII transmitted through the DSM-CC section and performs a detection process of the application forced termination signal of the linked application 1.

Then, when the DII is updated and the most significant bit of termination bitmap is set (termination_bitmap="10000000"), "1" is designated as termination flag tag, and the application forced termination signal of the linked application 1 is detected (S709). Therefore, the linked application 1 being executed is terminated (S710).

In addition, in the linked application 1, when a transition to the linked application 2 is instructed (S705), the AIT transmitted through data carousel transmission is acquired and analyzed (S706). Then, in the receiving device 20, according to the analysis result of the AIT, the linked application 2 transmitted through data carousel transmission is acquired and activated (S707 and S708).

In addition, in the linked application 2, "3" is designated as app_time_scope, that is, application forced termination (quit signal) is designated. Further, "2" is designated as termination_flag_tag, that is, the second bit from the most significant bit among 8 bits of termination _bitmap is set as a forced termination flag of the linked application 2. The continuation range information (app_time_scope, termination_flag_tag) is designated in one of the designation schemes 1 to 3 described above.

Then, in the receiving device 20, execution of the linked application 2 continues. Then, when the DII is updated and the most significant bit of termination bitmap is set (termination_{_}bitmap="10000000"), the application forced termination signal of the linked application 1 in which "1" is designated as termination flag tag is detected (S709). In this case, in the linked application 2, "3" is designated as app_time_scope. However, since "2" is designated as termination flag tag, the linked application 2 is not a target of the application forced termination signal and execution continues.

Then, when the DII is updated and the second bit from the most significant bit of termination_bitmap is set (termination_bitmap="01000000"), the application forced termination signal of the linked application 2 in which "2" is designated as termination flag tag is detected (S712). Therefore, the linked application 2 being executed is terminated (S713).

Similarly, in the linked application 1, when a transition to the linked application 3 is instructed, according to the analysis result of the AIT, the linked application 3 is acquired and activated (S705 to S708). However, in the linked application 3, "0" is designated as app_time_scope, that is, the continuation range information is not designated. The continuation range information is designated in one of the designation schemes 1 to 3 described above.

Then, execution of the linked application 3 continues. Then, similarly to the above-described case, when the DII is updated and the second bit from the most significant bit is set (S709), or when the most significant bit of termination_bitmap is set (S712), the application forced termination signal is detected. However, in the linked application 3, since "0" is designated as app_time_scope, execution continues.

That is, in both of the linked application 1 and the linked application 2, "3" is designated as app_time_scope. Therefore, when the application forced termination signal corresponding to its own termination_flag_tag is detected, it is recognized as a termination timing. Therefore, in the receiving device 20, while the application forced termination signal of the linked application 1 is not detected, execution of the linked application 1 continues. When the forced termination signal is detected, the linked application 1 is terminated. In addition, similarly, while the application forced termination signal of the linked application 2 is not detected, execution of the linked application 2 continues. When the forced termination signal is detected, the linked application 2 is terminated.

In this manner, it is possible to forcibly terminate the linked application 1 and the linked application 2 at a separate temporal position.

In addition, when termination is instructed or when a channel of the broadcast program is switched, the linked application 3 is terminated.

In addition, in the receiving device 20, again, the BML document is acquired (S711), and the data broadcast application is executed. In addition, when activation of the linked application 4 is instructed, the AIT is acquired and analyzed (S714). Then, in the receiving device 20, according to the analysis result of the AIT, the linked application 4 is acquired and activated (S715 and S716). When "3" is designated as app_time_scope, the linked application 4 is terminated when the application forced termination signal is detected.

The operation sequences of the modification scheme of type 3 have been described above.

### (Operation sequences of type 4)

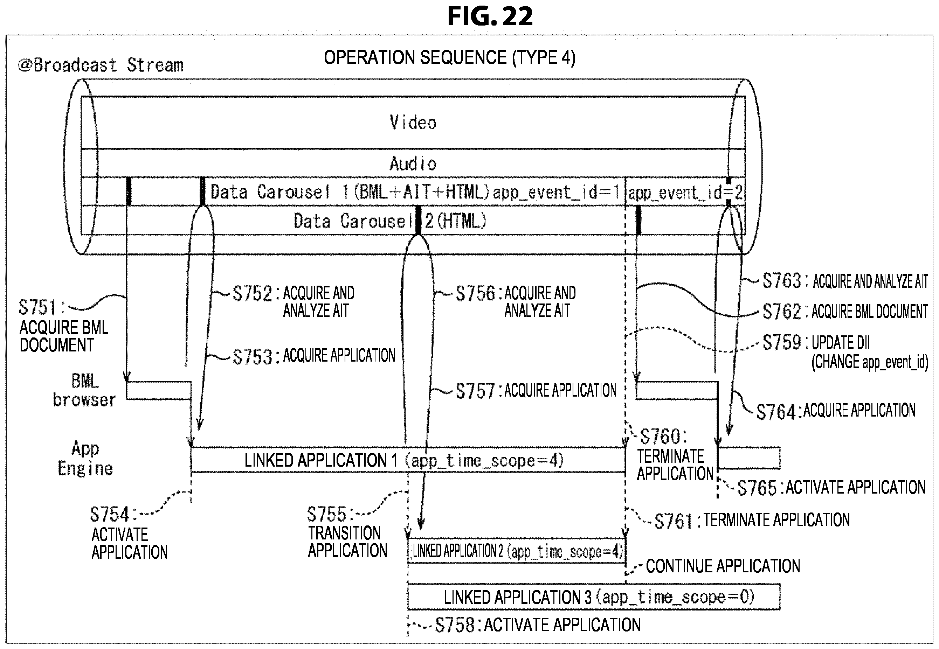

FIG. 22 is a diagram illustrating operation sequences of type 4.

As illustrated in FIG. 22, in a broadcast stream (transport stream), a video stream, an audio stream, and section data are multiplexed. In the example of FIG. 22, there are a plurality of data carousel transmissions. In a data carousel 1, a BML file, an HTML file, and an AIT file are transmitted. In addition, in a data carousel 2, an HTML file is transmitted.

In addition, within the section data, in the DSM-CC section transmitted through data carousel transmission, the DSM-CC section for DII message transmission is included. In addition, in a private data area of the DII message, the application event descriptor (FIG. 23) is arranged.

In the receiving device 20, while the broadcast content is viewed, the BML document transmitted through data carousel transmission is acquired (S751). Therefore, the data broadcast application is executed.

In addition, in the receiving device 20, while the broadcast content is viewed, when activation of the linked application 1 is instructed according to a user manipulation, the AIT transmitted through data carousel transmission is acquired and analyzed (S752).

In the receiving device 20, according to the analysis result of the AIT, the linked application 1 transmitted through data carousel transmission is acquired and activated (S753 and S754). In addition, in the linked application 1, "4" is designated as app_time_scope, that is, the application event (app_event) is designated. The continuation range information is designated in one of the designation schemes 1 to 3 described above.

Then, in the receiving device 20, execution of the linked application 1 continues. In this case, since the application event is designated as the continuation range information, the receiving device 20 constantly monitors the value of app_event_id included in a DII transmitted through the DSM-CC section and detects the changing point of the value of app_event_id. Also, a value of app_event_id of a comparison target of the changing point is, for example, a value of app_event_id that is acquired and held when the linked application 1 is activated.

Then, when the DII is updated and the value of app_event_id is changed from "1" to "2," in the receiving device 20, if the changing point of the value of app_event_id is detected (S759), the linked application 1 being executed is terminated (S760).

In addition, in the linked application 1, when a transition to the linked application 2 is instructed (S755), the AIT transmitted through data carousel transmission is acquired and analyzed (S756). Then, in the receiving device 20, according to the analysis result of the AIT, the linked application 2 transmitted through data carousel transmission is acquired and activated (S757 and S758). In addition, in the linked application 2, "4" is designated as app_time_scope, that is, the application event (app_event) is designated. The continuation range information is designated in one of the designation schemes 1 to 3 described above.

Then, in the receiving device 20, execution of the linked application 2 continues. Then, when the DII is updated and the value of app_event_id is changed from "1" to "2," in the receiving device 20, if the changing point of the value of app_event_id is detected (S759), the linked application 2 being executed is terminated (S761).

Similarly, in the linked application 1, when a transition to the linked application 3 is instructed, according to the analysis result of the AIT, the linked application 3 is acquired and activated (S755 to S758). However, in the linked application 3, "0" is designated as app_time_scope, that is, the continuation range information is not designated. The continuation range information is designated in one of the designation schemes 1 to 3 described above.

Then, in the receiving device 20, execution of the linked application 3 continues. Then, a DII is updated and the changing point of the value of app_event_id is detected (S759). In addition, in the linked application 3, since "0" is designated as app_time_scope, it is not recognized as a termination timing and execution continues.

That is, in both of the linked application 1 and the linked application 2, "4" is designated as app_time_scope. Therefore, when the changing point of the value of app_event_id is detected, it is recognized as a termination timing for both. Therefore, for example, in the receiving device 20, in the same application, execution of the linked applications 1 and 2 continues, and when the application is changed, the linked applications 1 and 2 are terminated. In addition, when termination is instructed or when a channel of the broadcast program is switched, the linked application 3 is terminated.

In addition, in the receiving device 20, again, the BML document is acquired (S762), and the data broadcast application is executed. In addition, when activation of the linked application 4 is instructed, the AIT is acquired and analyzed (S763). Then, in the receiving device 20, according to the analysis result of the AIT, the linked application 4 is acquired and activated (S764 and S765). When "4" is designated as app_time_scope, the linked application 4 is terminated when the changing point of the value of app_event_id is detected.

The operation sequences of type 4 have been described above.

### (Application event descriptor)

FIG. 23 is a diagram illustrating a data structure of an application event descriptor.

The application event descriptor (hybrid_application_event_descriptor) is arranged in, for example, the private data area of the DII message.

As illustrated in FIG. 23, in the application event descriptor, the following content is described.

In descriptor tag, a tag value assigned in the descriptor is described. In addition, in descriptor length, a descriptor length of the descriptor is described.

In application_event_id, a value of 16 bits for identifying the application event is described. In the receiving device 20, when the application event is designated as the continuation range information, a change of the value of application_event_id is monitored.

Also, description content of the application event descriptor is arbitrary and is not limited to the exemplary description of FIG. 23. In addition, in this specification, a description of "application event id" is abbreviated as "app_event_id" in some parts, but both represent an application event ID.

### <Content of basic process performed in each device>

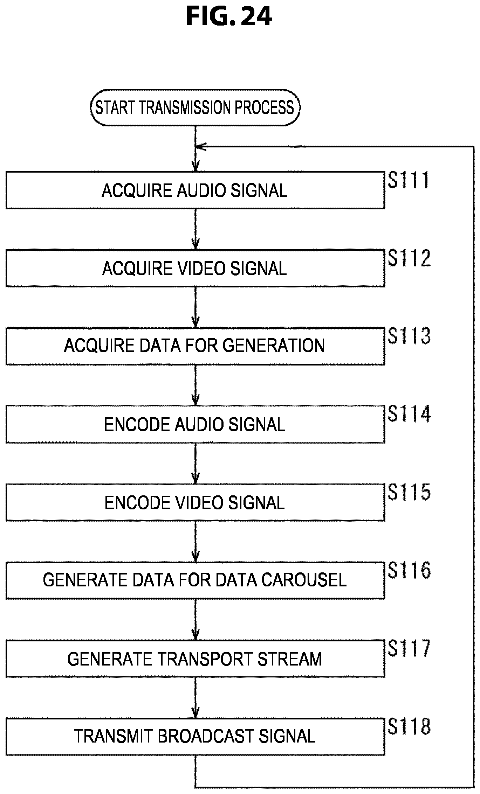

Next, with reference to flowcharts of FIGS. 24 to 27, content of specific processes performed in respective devices constituting the broadcast communication linked system 1 will be described.

### (Transmission process)

First, with reference to the flowchart of FIG. 24, the transmission process executed by the transmitting device 10 will be described.

In step S111, the sound acquisition unit 111 acquires an audio signal corresponding to a sound of the broadcast content from the external server or the like.

In step S112, the video acquisition unit 113 acquires a video signal corresponding to a video of the broadcast content from the external server or the like.

In step S113, the data acquisition unit 115 acquires data for generating data for a data carousel.

In step S114, the audio encoder 112 encodes the audio signal acquired by the sound acquisition unit 111 and generates an audio stream.

In step S115, the video encoder 114 encodes the video signal acquired by the video acquisition unit 113 and generates a video stream.

In step S116, the data generation unit for a data carousel 116 generates data for a data carousel based on the data for generation acquired by the data acquisition unit 115. The data for a data carousel includes section data of a section format.

In step S117, the multiplexing unit 117 multiplexes the audio stream generated by the audio encoder 112, the video stream generated by the video encoder 114 and the section data generated by the data generation unit for a data carousel 116 and generates a transport stream.

Also, here, although details are omitted for simplicity of description, the transport stream also includes caption data, section data of PSI/SI and the like.

In step S118, the transmitting unit 118 transmits the transport stream generated by the multiplexing unit 117 through the antenna 119 as the broadcast signal. When the process of step S118 is terminated, the process returns to step S111 and the process thereafter is repeated.

The transmission process has been completely described above.

### (Reception process)

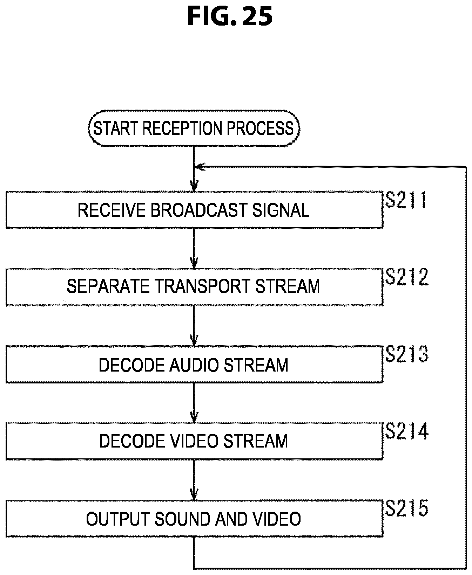

Next, with reference to the flowchart of FIG. 25, the reception process executed by the receiving device 20 will be described.

In step S211, the tuner 212 receives and demodulates the broadcast signal through the antenna 211.

In step S212, the demultiplexing unit 215 separates the transport stream demodulated by the tuner 212 into an audio stream, a video stream, and section data. Also, when the caption data is included in the transport stream, the demultiplexing unit 215 also separates the caption data.

In step S213, the audio decoder 218 decodes the audio stream separated by the demultiplexing unit 215 and generates an audio signal.

In step S214, the video decoder 217 decodes the video stream separated by the demultiplexing unit 215 and generates a video signal.

In step S215, the speaker 224 outputs a sound corresponding to the audio signal. In addition, the display 222 displays a video corresponding to the video signal. Therefore, a video of the broadcast content of the broadcast program or the like is displayed on the display 222. A sound corresponding to the video is output from the speaker 224.

When the process of step S215 is terminated, the process returns to step S211, and the process thereafter is repeated.

The reception process has been completely described above.

### (Data broadcast support process)

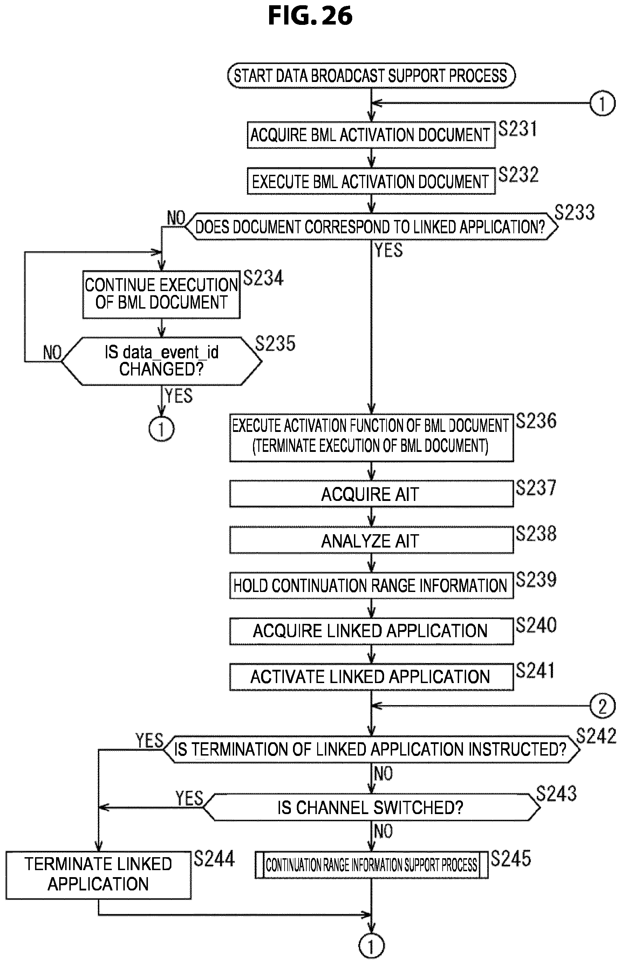

Next, with reference to the flowchart of FIG. 26, a data broadcast support process executed by the receiving device 20 will be described.

The data broadcast support process of FIG. 26 is executed when the broadcast content is viewed according to, for example, the reception process of FIG. 25, in the receiving device 20.

In step S231, when the data broadcast processing unit 216 analyzes a DII and DDB that are acquired from the DSM-CC section separated by the demultiplexing unit 215, a BML activation document of module_id = 0 is acquired.

In step S232, the data broadcast engine 220 controls a BML browser and thus executes the BML activation document acquired by the data broadcast processing unit 216.

In step S233, the data broadcast engine 220 determines whether the receiving device 20 has a function that can execute the linked application based on a program described in the BML activation document. In step S233, based on the program described in the BML activation document, when it is determined that the receiving device 20 does not have a function that can execute the linked application, for example, the HTML browser that is not compatible with HTML5, the process advances to step S234.

In step S234, the data broadcast engine 220 controls the BML browser and thus execution of the BML document acquired by the data broadcast processing unit 216 continues.

In addition, in step S235, the data broadcast processing unit 216 constantly monitors the value of data_event_id included in a DII transmitted through the DSM-CC section and thus determines whether the value of data_event_id is changed.

In step S235, when it is determined that the value of data_event_id is not changed, the process returns to step S234, and the process thereafter is repeated. Otherwise, in step S235, when it is determined that the value of data_event_id is changed, the process returns to step S231, and the process thereafter is repeated.

That is, when the data broadcast application indicates content of the data broadcast delivered in one data event, data_event_id distinguishes data events temporally adjacent to each other, and different identification information is assigned to the data broadcast applications adjacent to each other at the time of delivery. Therefore, when the value of data_event_id is changed, the BML document of the data broadcast application to be delivered next is acquired and executed.

On the other hand, in step S233, based on the program described in the BML activation document, when it is determined that the receiving device 20 has a function that can execute the linked application, for example, the HTML browser that is compatible with HTML5, the process advances to step S236.

In step S236, the data broadcast engine 220 executes an activation function (for example, the startAITControlledApp function (FIGS. 10 and 12)) of the linked application described in the BML document based on the program described in the BML activation document. As a result, the data broadcast engine 220 terminates execution of the BML document.

That is, in an operation example described with reference to the flowchart of FIG. 26, since automatic activation of the linked application is designated in the BML document, activation of the linked application starts regardless of a user manipulation.

In step S237, the control information acquisition unit 251 acquires the AIT transmitted through data carousel transmission.

In step S238, the control information analysis unit 252 analyzes the AIT acquired by the control information acquisition unit 251.

In step S239, the control information acquisition unit 251 acquires the continuation range information designated in one of the designation schemes 1 to 3 described above, and holds the information in the continuation range information holding unit 253.

Specifically, when the designation scheme 1 is used, the control information acquisition unit 251 acquires the continuation range information designated in, for example, application_time_scope that is an argument of the startAITControlledApp function (FIG. 10). In addition, when the designation scheme 2 is used, the control information acquisition unit 251 acquires the continuation range information inserted into, for example, a URI that is an argument of the startAITControlledApp function (FIG. 12). Further, when the designation scheme 3 is used, the control information acquisition unit 251 acquires the continuation range information described in the application continuation range according to, for example, the analysis result of the AIT by the control information analysis unit 252.

In step S240, the application control unit 255 acquires the linked application transmitted through data carousel transmission according to the analysis result of the AIT by the control information analysis unit 252.

In step S241, the application control unit 255 controls the application engine 235 according to the analysis result of the AIT by the control information analysis unit 252, and immediately activates the acquired linked application. Also, in a control command described in the AIT, "AutoStart" is designated.

According to the activation process of step S241, execution of the linked application starts. In step S242, the event determination unit 254 determines whether termination of the linked application being executed is instructed.

In step S242, when it is determined that termination of the linked application being executed is instructed, the process advances to step S244. In step S244, the application control unit 255 terminates the linked application being executed according to the determination result by the event determination unit 254.

Otherwise, in step S242, when it is determined that termination of the linked application being executed is not instructed, the process advances to step S243. In step S243, the event determination unit 254 determines whether a channel of the broadcast program being viewed is switched.

In step S243, when it is determined that the channel is switched, the process advances to step S244, and the linked application being executed is terminated.

Otherwise, in step S243, when it is determined that the channel is not switched, the process advances to step S245.

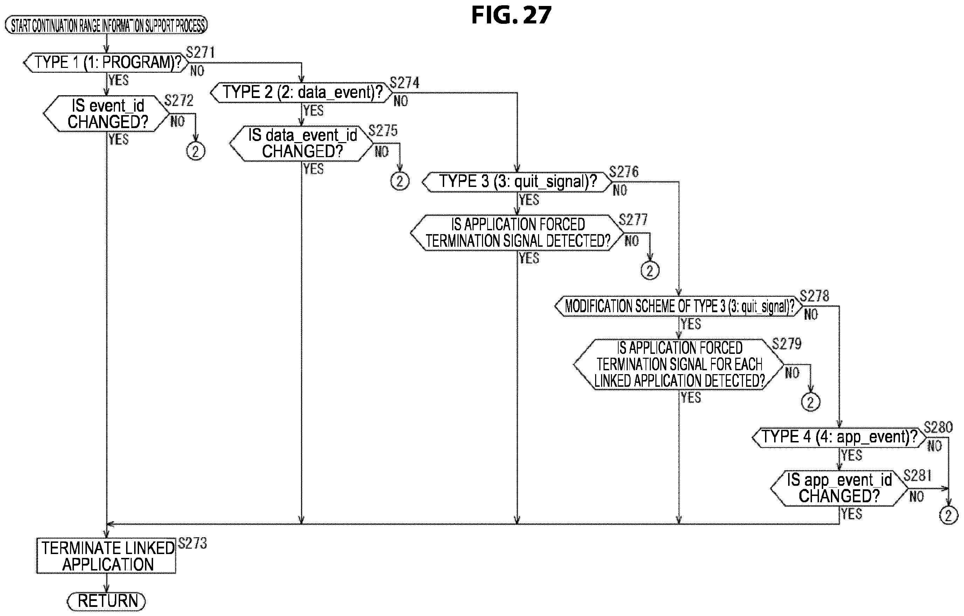

In step S245, the event determination unit 254 and the application control unit 255 execute a continuation range information support process. In the continuation range information support process, according to the designated continuation range information, a process for terminating the linked application being executed is performed. Also, details of the continuation range information support process will be described below with reference to the flowchart of FIG. 27.

When the process of step S244 or S245 is terminated, the process returns to step S231, and the process thereafter is executed.

The data broadcast support process has been completely described above.

### (Continuation range information support process)

Next, with reference to the flowchart of FIG. 27, the continuation range information support process corresponding to step S245 of FIG. 26 will be described.

In step S271, the event determination unit 254 determines whether type 1 (program (1: program)) is designated as designated content of the continuation range information held in the continuation range information holding unit 253 by the process of step S239 of FIG. 26.

In step S271, when it is determined that type 1 is designated, the process advances to step S272. In step S272, the event determination unit 254 constantly monitors the value of event_id included in EIT p transmitted by the SI section and determines whether the value of event_id is changed.

In step S272, when it is determined that the value of event_id is changed, the process advances to step S273. In step S273, the application control unit 255 controls the application engine 235 and terminates a target linked application. On the other hand, in step S272, when it is determined that the value of event_id is not changed, the process returns to step S242 of FIG. 26, and the process thereafter is repeated.

Otherwise, in step S271, when it is determined that type 1 is not designated, the process advances to step S274. In step S274, the event determination unit 254 determines whether type 2 (data event (2: data_event)) is designated as designated content of the continuation range information held in the continuation range information holding unit 253.

In step S274, when it is determined that type 2 is designated, the process advances to step S275. In step S275, the event determination unit 254 constantly monitors a value of data_event_id included in a DII transmitted by the DSM-CC section of data carousel transmission and determines whether the value of data_event_id is changed.

In step S275, when it is determined that the value of data_event_id is changed, the process advances to step S273, and the target linked application is terminated by the application control unit 255. On the other hand, in step S275, when it is determined that the value of data_event_id is not changed, the process returns to step S242 of FIG. 26, and the process thereafter is repeated.

Otherwise, in step S274, when it is determined that type 2 is not designated, the process advances to step S276. In step S276, the event determination unit 254 determines whether type 3 (application forced termination (3: quit signal)) is designated as designated content of the continuation range information held in the continuation range information holding unit 253.

In step S276, when it is determined that type 3 is designated, the process advances to step S277. In step S277, the event determination unit 254 constantly monitors the private data area of a DII transmitted by the DSM-CC section of data carousel transmission and determines whether the application forced termination signal is detected.

In step S277, when it is determined that the application forced termination signal is detected, the process advances to step S273, and the target linked application is terminated by the application control unit 255. On the other hand, in step S277, when it is determined that the application forced termination signal is not detected, the process returns to step S242 of FIG. 26, and the process thereafter is repeated.

Otherwise, in step S276, when it is determined that type 3 is not designated, the process advances to step S278. In step S278, the event determination unit 254 determines whether the modification scheme of type 3 (application forced termination (3: quit signal)) is designated as designated content of the continuation range information held in the continuation range information holding unit 253. Also, in both of type 3 and the modification scheme of type 3, as the continuation range information, app_time_scope="3" indicating application forced termination is designated. However, in the modification scheme of type 3, since termination_flag_tag is further designated, it is possible to distinguish a type by, for example, the difference.

In step S278, when it is determined that the modification scheme of type 3 is designated, the process advances to step S279. In step S279, the event determination unit 254 constantly monitors the private data area of a DII transmitted by the DSM-CC section of data carousel transmission and determines whether the application forced termination signal of the linked application being executed is detected as the application forced termination signal for each linked application.

In step S279, when it is determined that the application forced termination signal of the linked application being executed is detected, the process advances to step S273, and the target linked application of the application forced termination signal is terminated by the application control unit 255. On the other hand, in step S279, when it is determined that the application forced termination signal of the linked application being executed is not detected, the process returns to step S242 of FIG. 26, and the process thereafter is repeated.

Otherwise, in step S278, when it is determined that the modification scheme of type 3 is not designated, the process advances to step S280. In step S280, the event determination unit 254 determines whether type 4 (application event (4: app_event)) is designated as designated content of the continuation range information held in the continuation range information holding unit 253.

In step S280, when it is determined that type 4 is designated, the process advances to step S281. In step S281, the event determination unit 254 constantly monitors the private data area of a DII transmitted by the DSM-CC section of data carousel transmission and determines whether the value of app_event_id is changed.

In step S281, when it is determined that the value of app_event_id is changed, the process advances to step S273, and the target linked application is terminated by the application control unit 255. On the other hand, in step S281, when it is determined that the value of app_event_id is not changed, the process returns to step S242 of FIG. 26, and the process thereafter is repeated.

Otherwise, in step S280, when it is determined that type 4 is not designated, since the continuation range information is not designated, the process returns to step S242 of FIG. 26, and the process thereafter is repeated.

Then, when the process of step S273 is terminated, the process returns to step S245 of FIG. 26, and the process thereafter is repeated.

The continuation range information support process has been completely described above.

Also, in steps S272, S275, S277, S279 and S281 of FIG. 27, a determination condition of an event for each type is an example. Other determination conditions that can be used to determine an event that can specify a continuation range of the operation of the linked application may be used.

### (Exemplary screen transition)

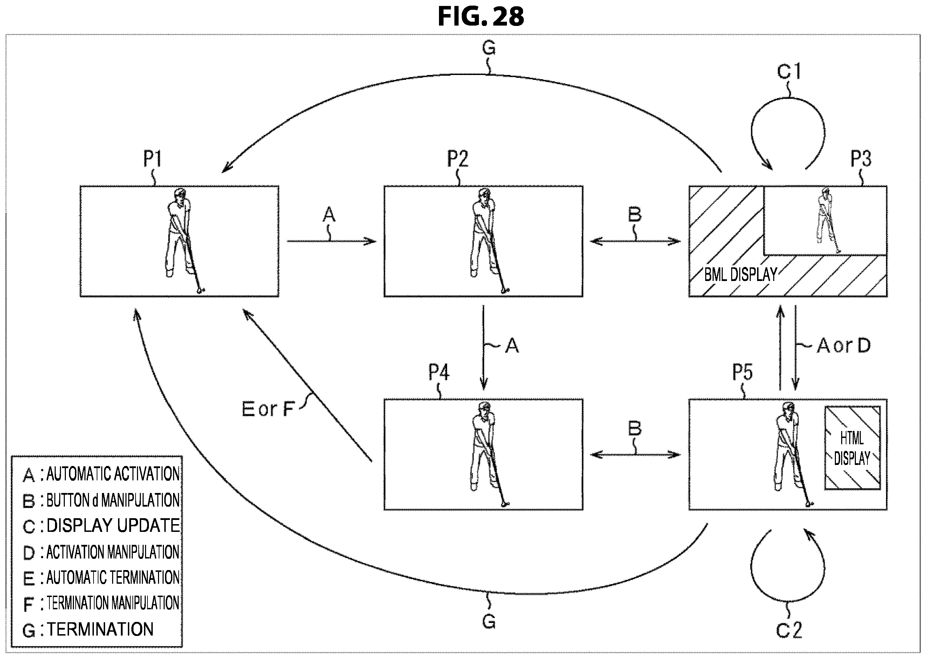

FIG. 28 is a diagram illustrating a detailed example of a screen transition when the data broadcast support process of FIG. 26 is executed in the receiving device 20.

As illustrated in FIG. 28, in the receiving device 20, when a predetermined channel is selected according to a manipulation of the remote controller 20R or the like, a video P1 of the predetermined broadcast program is displayed on the display 222. In addition, reception of the data broadcast automatically starts, and the BML browser starts a process for the data broadcast application created by the BML document. In this case, although a video P2 of the broadcast program is displayed, a video of the data broadcast application is not displayed.

Here, when the button d of the remote controller 20R is manipulated, a video ("BML display" in the drawing) of the data broadcast application is displayed in a separate type arrangement with respect to a video P3 of the broadcast program. Also, when a predetermined event occurs according to switching of the broadcast program or a specified scene, display content of the data broadcast application is updated in response to this event (C1 in the drawing). In addition, while the data broadcast application is displayed, when the button d is manipulated again, display of the data broadcast application is terminated and the screen returns to a state in which only the video P2 of the broadcast program is displayed.

In addition, while a video of the data broadcast application is displayed with respect to the video P3 of the broadcast program, when a predetermined termination manipulation is performed, the data broadcast application being executed is terminated and the screen returns to a state in which only the video P1 of the broadcast program is displayed.

While the video P2 of the broadcast program is displayed, when automatic activation of the linked application is set, the BML browser automatically activates the linked application created by the HTML document. In this case, although a video P4 of the broadcast program is displayed, a video of the linked application executed by the HTML browser is not displayed.

Also, while the linked application is automatically activated, it is determined whether the receiving device 20 has a function that can execute the linked application. The linked application is automatically activated only when this condition is satisfied. In addition, as described above, the linked application is acquired from the broadcast stream and activated.

While the video P4 of the broadcast program is displayed, when automatic termination of the linked application is set, or when a predetermined termination manipulation is performed, the linked application is terminated. Therefore, the screen returns to a state in which only the video P1 of the broadcast program is displayed.

In addition, while the video P4 of the broadcast program is displayed, when the button d is manipulated, a video ("HTML display" in the drawing) of the linked application is displayed in an overlay type arrangement with respect to a video P5 of the broadcast program. Further, when a predetermined event such as switching of a specified scene occurs, display content of the linked application is updated in response to this event (C2 in the drawing).

Then, while a video of the linked application is displayed with respect to the video P5 of the broadcast program, when a predetermined event that instructs termination of the linked application occurs, the linked application being executed is terminated. Specifically, if the continuation range information is not designated in the AIT, when termination of the linked application being executed is instructed, the linked application being executed is terminated.

In addition, if the program is designated as the continuation range information, when the value of event_id is changed or if the data event is designated as the continuation range information, when the value of data_event_id is changed, the linked application being executed is automatically terminated. Further, if application forced termination is designated as the continuation range information, when the application forced termination signal is detected or if the application event is designated as the continuation range information, when the value of app_event_id is changed, the linked application being executed is automatically terminated. Therefore, the linked application is terminated and the screen returns to a state in which only the video P1 of the broadcast program is displayed.

In addition, while the video P3 of the broadcast program and a video ("BML display" in the drawing) of the data broadcast application are displayed, when automatic activation is set, or when a predetermined activation manipulation is performed, a video ("HTML display" in the drawing) of the linked application is displayed in an overlay type arrangement with respect to the video P5 of the broadcast program. In addition, on the other hand, the video P5 of the broadcast program on which the video of the linked application is overlaid may be transitioned to the video P3 of the broadcast program on which the video of the data broadcast application is overlaid.

Detailed examples of a screen transition in the receiving device 20 have been described above.

### <Second embodiment>

### <Exemplary configuration of broadcast communication linked system>

FIG. 29 illustrates an exemplary configuration of a broadcast communication linked system 2. The broadcast communication linked system 2 includes the transmitting device 10, the receiving device 20, the AIT server 30, and the application server 40.

That is, the broadcast communication linked system 2 is different from the broadcast communication linked system 1 of FIG. 1 in that the AIT server 30 and the application server 40 are further provided. In the broadcast communication linked system 2, instead of the transmitting device 10, the AIT server 30 provides the AIT, and the application server 40 provides the linked application.

The AIT server 30 provides the AIT to the receiving device 20 via the Internet 90 in response to a request from the receiving device 20. In addition, the application server 40 provides the linked application to the receiving device 20 via the Internet 90 in response to a request from the receiving device 20.

The receiving device 20 accesses the AIT server 30 via the Internet 90 and acquires the AIT.

Specifically, in the receiving device 20, the communication I/F 225 accesses the AIT server 30 via the Internet 90 under control of the control unit 234 and requests the AIT. The communication I/F 225 receives the AIT provided from the AIT server 30 and supplies the AIT to the control unit 234. Then, the control unit 234 controls the application engine 235 based on the AIT supplied from the communication I/F 225.

The receiving device 20 acquires, for example, the linked application that is set to be immediately and automatically executed based on the AIT, from the application server 40 and immediately executes the application.

Specifically, the communication I/F 225 accesses the application server 40 via the Internet 90 under control of the application engine 235, and requests the linked application. The communication I/F 225 receives the linked application provided from the application server 40 and stores the application in the memory 236. Then, under control of the control unit 234, the application engine 235 activates the linked application stored in the memory 236 and controls an operation thereof.

Also, the AIT server 30 and the application server 40 are managed by a broadcaster or the like. In addition, in the example of FIG. 29, one AIT server 30 and one application server 40 are illustrated. However, actually, a plurality of AIT servers 30 or application servers 40 are provided for each broadcaster. The receiving device 20 accesses any of these servers according to information designated by the AIT or the like.

The broadcast communication linked system 2 is configured as described above.

### <Details of AIT server>

### (Exemplary configuration of AIT server)

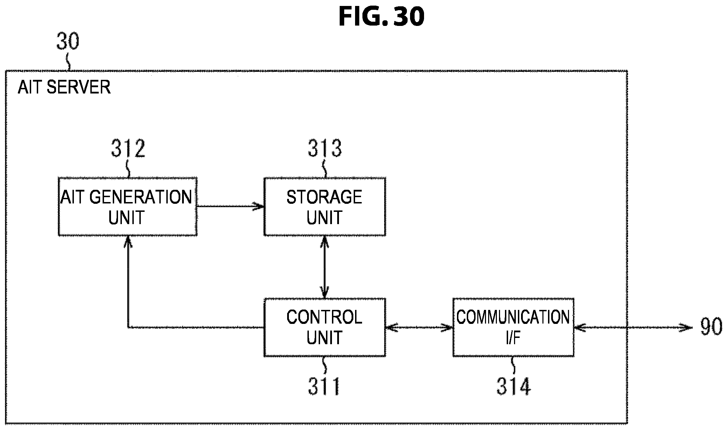

FIG. 30 illustrates an exemplary configuration of the AIT server 30 of FIG. 29.

The AIT server 30 includes a control unit 311, an AIT generation unit 312, a storage unit 313, and a communication I/F 314.

The control unit 311 controls operations of respective units of the AIT server 30.

The AIT generation unit 312 generates the AIT and stores the AIT in the storage unit 313 under control of the control unit 311.

When the receiving device 20 requests the AIT, the control unit 311 reads and acquires the AIT from the storage unit 313.

The communication I/F 314 transmits the AIT to the receiving device 20 via the Internet 90 under control of the control unit 311.

The AIT server 30 is configured as described above.

### (AIT delivery process)

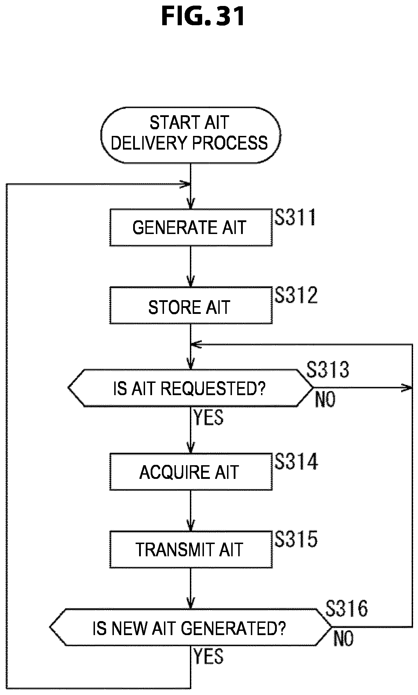

Next, with reference to the flowchart of FIG. 31, the AIT delivery process that is executed by the AIT server 30 of FIG. 29 will be described.

In step S311, the AIT generation unit 312 generates the AIT under control of the control unit 311. In step S312, the AIT generation unit 312 stores the generated AIT in the storage unit 313 under control of the control unit 311.

In step S313, the control unit 311 monitors the communication I/F 314 and thus determines whether the receiving device 20 requests the AIT. In step S313, a request from the receiving device 20 is awaited, and the process advances to step S314.

In step S314, the control unit 311 acquires the AIT from the storage unit 313 in response to the request from the receiving device 20. In step S315, the communication I/F 314 transmits the acquired AIT to the receiving device 20 via the Internet 90 under control of the control unit 311.

When the transmission process of step S315 is terminated, the process advances to step S316. In step S316, the control unit 311 determines whether a new AIT is generated.

In step S316, when it is determined that the new AIT is generated, the process returns to step S311, and processes of step S311 and S312 are executed again. Therefore, the new AIT is generated by the AIT generation unit 312 and stored in the storage unit 313.

On the other hand, in step S316, when it is determined that the new AIT is not generated, the process returns to step S313, and the process thereafter is repeated. In this case, in response to a request from the receiving device 20, the AIT is delivered.

The AIT delivery process has been completely described above.

### <Third embodiment>

### <Exemplary configuration of broadcast communication linked system>

FIG. 32 illustrates an exemplary configuration of a broadcast communication linked system 3. The broadcast communication linked system 3 includes the transmitting device 10, the receiving device 20, and the application server 40.

That is, the broadcast communication linked system 3 is different from the broadcast communication linked system 2 of FIG. 29 in that the AIT server 30 is not in the configuration. In the broadcast communication linked system 3, similarly to the broadcast communication linked system 1 of FIG. 1, instead of the AIT server 30, the transmitting device 10 transmits information that corresponds to the AIT and is included in the broadcast signal.

Specifically, the transmitting device 10 generates the AIT and transmits the generated AIT as a file of a document having, for example, an XML format, through data carousel transmission. In this case, the AIT is delivered together with the data broadcast application or the like. Also, the AIT may be transmitted by other transmitting methods. For example, the AIT is transmitted as binary data through an AIT section stream.

The receiving device 20 acquires the AIT transmitted through data carousel transmission, the AIT section stream or the like. The receiving device 20 acquires, for example, the linked application that is set to be immediately and automatically executed from the application server 40 and immediately executes the application based on the acquired AIT.

The broadcast communication linked system 3 is configured as described above.

### <AIT delivery using broadcast waves>

### (Method of acquiring document and AIT transmitted through data carousel transmission)

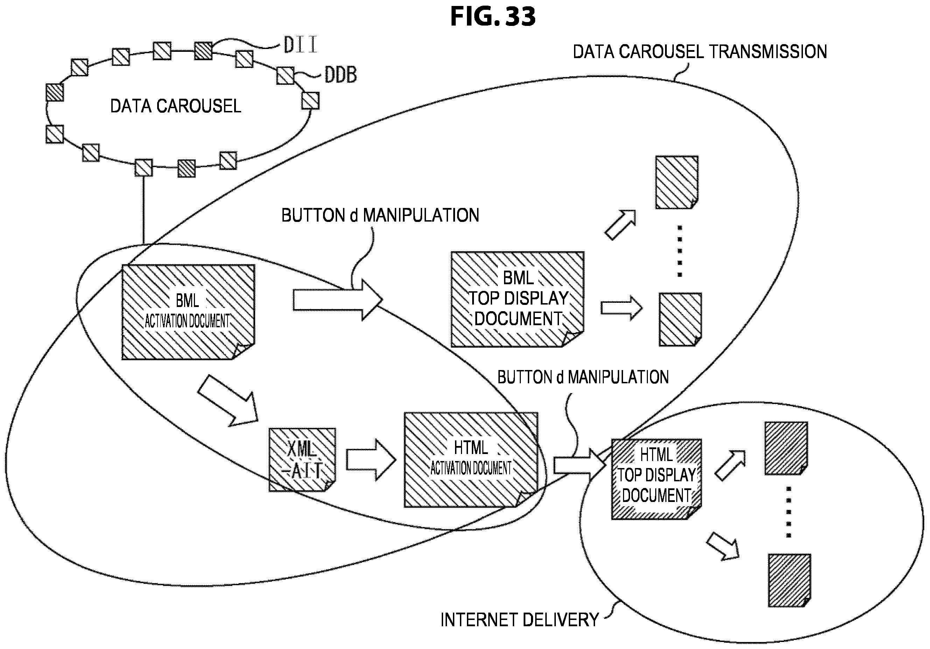

FIG. 33 is a diagram describing a method of acquiring a document and an AIT transmitted through data carousel transmission.

As illustrated in FIG. 33, when the data broadcast engine 220 controls the BML browser and executes the data broadcast application, the data broadcast processing unit 216 (FIG. 3) performs filter setting such that the DDB message in which "0" is designated as the module ID is acquired.

That is, since the BML activation document to be initially displayed is transmitted by a module having a module ID of "0," it is necessary to rebuild the module having a module ID of "0" when the data broadcast application is activated, and such module filter setting is performed. Also, the module ID of "0" is designated by the DII message or information set in advance.

Therefore, the BML activation document is restored, but a video of the BML activation document is not displayed. In addition, when the button d of the remote controller 20R is manipulated, a BML top display document is restored and a top page of the data broadcast application is displayed by the BML browser. Then, similarly to a case in which a transition to another BML document is performed, module filter setting is performed such that a module having a module ID configured to transmit a BML document of a transition destination is acquired, the module having the corresponding module ID is acquired, and the BML document of the transition destination is restored. Therefore, a video of the data broadcast application is sequentially displayed on the display 222.

On the other hand, when automatic activation of the linked application is set, an activation determination process of the linked application is performed by a program described in the BML activation document. That is, it is determined whether the receiving device 20 has a function that can execute the linked application, and the linked application is automatically activated when this condition is satisfied.

When it is determined that the linked application can be activated by the activation determination process, the AIT transmitted through data carousel transmission is acquired. In addition, an HTML activation document is restored, but a video of the HTML activation document is not displayed. Then, when the button d of the remote controller 20R is manipulated, an HTML top display document is acquired by accessing the application server 40 according to the analysis result of the AIT. Therefore, a top page of the linked application is displayed by the HTML browser. Then, similarly to a case in which a transition to another HTML document is performed, the HTML document is acquired from the application server 40.

The method of acquiring a document and an AIT transmitted through data carousel transmission has been described above.

### (Method of acquiring an AIT and a linked application)

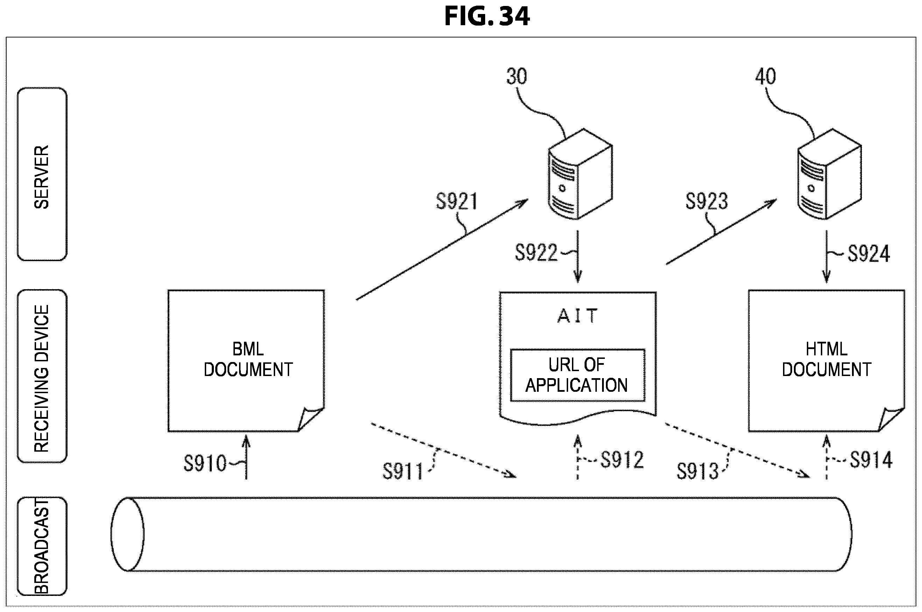

FIG. 34 is a diagram describing a method of acquiring an AIT and a linked application.

In FIG. 34, basically, a dashed line indicates a flow of acquiring the AIT and the linked application in the first embodiment, and a solid line indicates a flow of acquiring the AIT and the linked application in the second embodiment.

In the first embodiment, the receiving device 20 acquires the BML document transmitted through data carousel transmission and thus executes the data broadcast application (S910). In addition, the receiving device 20 constantly monitors the broadcast signal (S911), and thus acquires the AIT transmitted through data carousel transmission (S912). Then, the receiving device 20 acquires the linked application that is transmitted through data carousel transmission and created by the HTML document according to the analysis result of the AIT (S913 and S914).

In addition, in the second embodiment, the receiving device 20 acquires the BML document transmitted through data carousel transmission and thus executes the data broadcast application (S910). In addition, the receiving device 20 accesses the AIT server 30 (S921), and thus acquires the AIT (S922). Then, the receiving device 20 accesses the application server 40 according to the analysis result of the AIT (S923), and thus acquires the linked application created by the HTML document (S924).

In addition, in the third embodiment, the receiving device 20 acquires the BML document transmitted through data carousel transmission, and thus executes the data broadcast application (S910). In addition, the receiving device 20 constantly monitors the broadcast signal (S911), and thus acquires the AIT transmitted through data carousel transmission (S912). Then, the receiving device 20 accesses the application server 40 according to the analysis result of the AIT (S923), and thus acquires the linked application created by the HTML document (S924).

The method of acquiring an AIT and a linked application has been described above.

As described above, in the present embodiment, in hybrid-type broadcast, it is possible to provide the linked application executed in linkage with AV content of the broadcast program or the like. In addition, since the receiving device 20 can execute both the data broadcast application and the linked application, it is possible to easily implement an operation in which data broadcast and hybrid-type broadcast are provided together.

In addition, in the related art, in order to terminate the linked application being executed, an operation in which a program (script) of a termination process is described in the HTML document is assumed. However, in order to implement the operation, it is necessary to add a new program. On the other hand, in the present embodiment, when existing information such as event_id included in EIT p or data_event_id included in a DII delivered through broadcast waves is used, the linked application being executed is terminated according to the continuation range information designated by the AIT. Therefore, there is no need to add a program to the HTML document. Accordingly, while the operation is performed, since time spent adding the program can be saved, it is possible to easily implement termination control of the linked application.

In addition, as described above, it is assumed that data broadcast and hybrid-type broadcast will be provided together in the future and selectively used. Accordingly, it is assumed for the broadcaster that information for implementing both functions of data broadcast and hybrid-type broadcast will be added to the broadcast program, and on the other hand, a receiver side also needs to support both functions of data broadcast and hybrid-type broadcast.

When hybrid-type broadcast is operated under such circumstances, it is necessary to perform operations such that the user can use the function for data broadcast and these functions can be selectively used. In such operations, when the broadcast communication linked system to which the present technology is applied is used, since the receiving device 20 can execute both the data broadcast application and the linked application, it is possible to easily implement the operation.

Also, in the above description, the receiving device 20 has been described as the television receiver, but the present disclosure is not limited thereto. For example, a receiver that can receive a broadcast signal transmitted from the transmitting device 10 such as a personal computer, a mobile terminal device, or a tablet terminal and communicate with a server connected to the Internet 90 may be used. In addition, the receiving device 20 has a configuration in which, for example, a display or a speaker is not included, and a function thereof may be embedded in an electronic device, for example, a video recorder or a set top box.

### <Configuration Example of Computer to Which Present Technology is Applied>

The series of processes described above can be executed by hardware but can also be executed by software. When the series of processes is executed by software, a program that constructs such software is installed into a computer. Here, the expression "computer" includes a computer in which dedicated hardware is incorporated and a general-purpose personal computer or the like that is capable of executing various functions when various programs are installed.

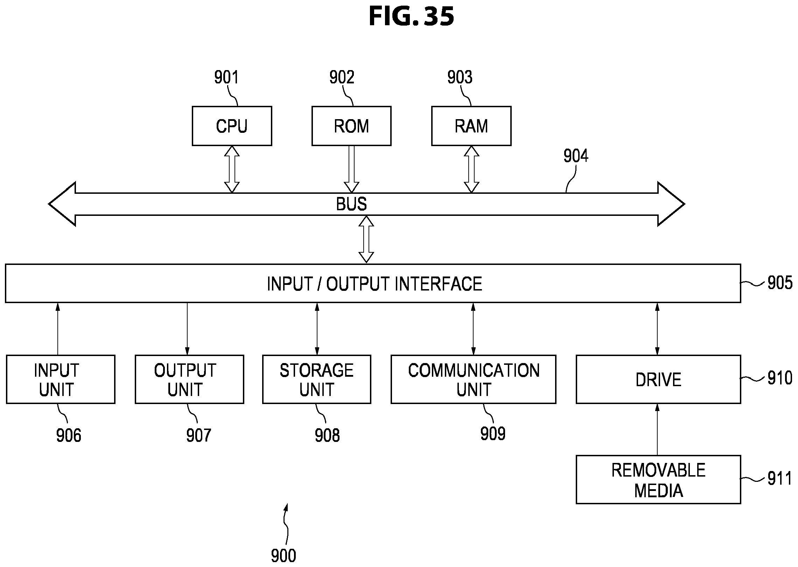

FIG. 35 is a block diagram showing a hardware configuration example of a computer that performs the above-described series of processing using a program.

In the computer 900, a central processing unit (CPU) 901, a read only memory (ROM) 902 and a random access memory (RAM) 903 are mutually connected by a bus 904.

An input/output interface 905 is also connected to the bus 904. An input unit 906, an output unit 907, a storage unit 908, a communication unit 909, and a drive 910 are connected to the input/output interface 905.

The input unit 906 is configured from a keyboard, a mouse, a microphone or the like. The output unit 907 is configured from a display, a speaker or the like. The storage unit 908 is configured from a hard disk, a non-volatile memory or the like. The communication unit 909 is configured from a network interface or the like. The drive 910 drives a removable media 911 such as a magnetic disk, an optical disk, a magneto-optical disk, a semiconductor memory or the like.

In the computer 900 configured as described above, the CPU 901 loads a program that is stored, for example, in the storage unit 908 onto the RAM 903 via the input/output interface 905 and the bus 904, and executes the program. Thus, the above-described series of processing is performed.

Programs to be executed by the computer 900 (the CPU 901) are provided being recorded in the removable media 911 which is a packaged media or the like. Also, programs may be provided via a wired or wireless transmission medium, such as a local area network, the Internet or digital satellite broadcasting.

In the computer 900, by inserting the removable media 911 into the drive 910, the program can be installed in the storage unit 908 via the input/output interface 905. Further, the program can be received by the communication unit 909 via a wired or wireless transmission media and installed in the storage unit 908. Moreover, the program can be installed in advance in the ROM 902 or the storage unit 908.

It should be noted that the program executed by a computer 900 may be a program that is processed in time series according to the sequence described in this specification or a program that is processed in parallel or at necessary timing such as upon calling.

A processing step herein for describing a program which causes the computer 100 to perform various processing does not necessarily have to be processed chronologically in the order described in a flow chart. It also includes processing performed in parallel or individually (for example, parallel processing or processing by an object).

The program may be processed by one computer or by a plurality of computers in a distributed manner. Further, the program may be performed after being transferred to a remote computer.

Further, in the present disclosure, a system has the meaning of a set of a plurality of configured elements (such as an apparatus or a module (part)), and does not take into account whether or not all the configured elements are in the same casing. Therefore, the system may be either a plurality of apparatuses, stored in separate casings and connected through a network, or a plurality of modules within a single casing.

An embodiment of the present technology is not limited to the embodiments described above, and various changes and modifications may be made without departing from the scope of the present technology.

For example, the present technology can adopt a configuration of cloud computing which processes by allocating and connecting one function by a plurality of apparatuses through a network.

Further, each step described by the above mentioned flow charts can be executed by one apparatus or by allocating a plurality of apparatuses.

In addition, in the case where a plurality of processes is included in one step, the plurality of processes included in this one step can be executed by one apparatus or by allocating a plurality of apparatuses.

The invention is performed as defined in the claims that follow. (2)
(19)

### Reference Signs List

- 1, 2, 3: broadcast communication linked system
- 10: transmitting device
- 20: receiving device
- 20R: remote controller
- 30: AIT server
- 40: application server
- 90: Internet
- 212: tuner
- 216: data broadcast processing unit
- 220: data broadcast engine
- 222: display
- 225: communication I/F
- 234, 234-1, 234-2: control unit
- 235, 235-1, 235-2: application engine
- 251: control information acquisition unit
- 252: control information analysis unit
- 253: continuation range information holding unit
- 254: event determination unit
- 255: application control unit
- 311: control unit
- 312: AIT generation unit
- 314: communication I/F
- 900: computer
- 901: CPU

## Claims

1. A receiving device (20) comprising:
a receiving unit (212) configured to receive AV content;
a continuation range information acquisition unit configured to acquire continuation range information for specifying a range on a time axis in which an operation of an application program simultaneously executed with the AV content is able to continue; and
a control unit (234) configured to terminate the application program being executed based on the continuation range information,
wherein the AV content is transmitted through a broadcast wave and the AV content is a broadcast program,
wherein the continuation range information includes information that is included in predetermined information transmitted through the broadcast wave and is used to designate a predetermined event from which it is possible to specify a continuation range of an operation of the application program,
wherein the control unit is configured to terminate the application program being executed when a forced termination signal of the application program, which is included in a download info indication, DII, transmitted through data carousel transmission using the broadcast wave, is detected as the designated event of the continuation range information,
wherein the control unit is configured to terminate the application program when a change of content of the broadcast program is detected as the designated event,
wherein the control unit is configured to terminate the application program when a change of content of data broadcast simultaneously executed with the broadcast program is detected as the designated event, and
wherein the control unit is configured to terminate the application program when a change of content of the application program is detected as the designated event.

2. The receiving device (20) according to claim 1,
wherein, when the application programs are executed, the forced termination signal is detected for each application program being executed.

3. The receiving device (20) according to claim 2,
wherein the control unit (34) is configured to terminate the application program being executed in association with the forced termination signal for each application program.

4. The receiving device (20) according to claim 1,
wherein the control unit (34) is configured to terminate the application program being executed when a value of an event identifier included in an event information table, EIT, transmitted through the broadcast wave is updated.

5. The receiving device (20) according to claim 1,
wherein the control unit (34) is configured to terminate the application program being executed when a value of an event identifier for data broadcast included in a DII transmitted through data carousel transmission using the broadcast wave is updated.

6. The receiving device (20) according to claim 1,
wherein the control unit (34) is configured to terminate the application program being executed when a value of an event identifier for an application included in a DII transmitted through data carousel transmission using the broadcast wave is updated.

7. The receiving device (20) according to claim 1,
wherein the control unit (34) is configured to terminate the application program being executed when the event is not designated, and when termination of the application program being executed is instructed or when the AV content is switched.

8. The receiving device (20) according to any proceeding claim,
wherein the continuation range information is included in control information for controlling an operation of the application program and/or designated as an argument of a function for activating the application program and/or designated as a parameter of a uniform resource identifier, URI, that is an argument of a function for activating the application program.

9. A receiving method of a receiving device (20), the method comprising:
by the receiving device,
a step of receiving AV content;
a step of acquiring continuation range information for specifying a range on a time axis in which an operation of an application program simultaneously executed with the AV content is able to continue; and
a step of terminating the application program being executed based on the continuation range information
wherein the AV content is transmitted through a broadcast wave and the AV content is a broadcast program,
wherein the continuation range information includes information that is included in predetermined information transmitted through the broadcast wave and is used to designate a predetermined event from which it is possible to specify a continuation range of an operation of the application program,
wherein the control unit is configured to terminate the application program being executed when a forced termination signal of the application program, which is included in a download info indication, DII, transmitted through data carousel transmission using the broadcast wave, is detected as the designated event of the continuation range information,
wherein the control unit is configured to terminate the application program when a change of content of the broadcast program is detected as the designated event,
wherein the control unit is configured to terminate the application program when a change of content of data broadcast simultaneously executed with the broadcast program is detected as the designated event, and
wherein the control unit is configured to terminate the application program when a change of content of the application program is detected as the designated event.

10. A program for causing a computer to function as:
a receiving unit (20) configured to receive AV content;
a continuation range information acquisition unit configured to acquire continuation range information for specifying a range on a time axis in which an operation of an application program simultaneously executed with the AV content is able to continue; and
a control unit (34) configured to terminate the application program being executed based on the continuation range information,
wherein the AV content is transmitted through a broadcast wave and the AV content is a broadcast program,
wherein the continuation range information includes information that is included in predetermined information transmitted through the broadcast wave and is used to designate a predetermined event from which it is possible to specify a continuation range of an operation of the application program,
wherein the control unit is configured to terminate the application program being executed when a forced termination signal of the application program, which is included in a download info indication, DII, transmitted through data carousel transmission using the broadcast wave, is detected as the designated event of the continuation range information,
wherein the control unit is configured to terminate the application program when a change of content of the broadcast program is detected as the designated event,
wherein the control unit is configured to terminate the application program when a change of content of data broadcast simultaneously executed with the broadcast program is detected as the designated event, and
wherein the control unit is configured to terminate the application program when a change of content of the application program is detected as the designated event.

11. A transmitting device (10) comprising:
a generation unit configured to generate continuation range information for specifying a range on a time axis in which an operation of an application program simultaneously executed with AV content is able to continue; and
a transmitting unit (118) configured to transmit the continuation range information,
wherein the AV content is transmitted through a broadcast wave,
wherein the continuation range information includes information that is included in predetermined information transmitted through the broadcast wave and is used to designate a predetermined event from which it is possible to specify a continuation range of an operation of the application program and the AV content is a broadcast program,
wherein the control unit is configured to terminate the application program being executed when a forced termination signal of the application program, which is included in a download info indication, DII, transmitted through data carousel transmission using the broadcast wave, is detected as the designated event of the continuation range information,
wherein the control unit is configured to terminate the application program when a change of content of the broadcast program is detected as the designated event,
wherein the control unit is configured to terminate the application program when a change of content of data broadcast simultaneously executed with the broadcast program is detected as the designated event, and
wherein the control unit is configured to terminate the application program when a change of content of the application program is detected as the designated event.

12. A transmitting method of a transmitting device (10), the method comprising:
by the transmitting device,
a step of generating continuation range information for specifying a range on a time axis in which an operation of an application program simultaneously executed with AV content is able to continue; and
a step of transmitting the continuation range information,
wherein the AV content is transmitted through a broadcast wave and the AV content is a broadcast program,
wherein the continuation range information includes information that is included in predetermined information transmitted through the broadcast wave and is used to designate a predetermined event from which it is possible to specify a continuation range of an operation of the application program,
wherein the control unit is configured to terminate the application program being executed when a forced termination signal of the application program, which is included in a download info indication, DII, transmitted through data carousel transmission using the broadcast wave, is detected as the designated event of the continuation range information,
wherein the control unit is configured to terminate the application program when a change of content of the broadcast program is detected as the designated event,
wherein the control unit is configured to terminate the application program when a change of content of data broadcast simultaneously executed with the broadcast program is detected as the designated event, and
wherein the control unit is configured to terminate the application program when a change of content of the application program is detected as the designated event.

13. A program for causing a computer to function as:
a generation unit configured to generate continuation range information for specifying a range on a time axis in which an operation of an application program simultaneously executed with AV content is able to continue; and
a transmitting unit (118) configured to transmit the continuation range information wherein the AV content is transmitted through a broadcast wave and the AV content is a broadcast program,
wherein the continuation range information includes information that is included in predetermined information transmitted through the broadcast wave and is used to designate a predetermined event from which it is possible to specify a continuation range of an operation of the application program,
wherein the control unit is configured to terminate the application program being executed when a forced termination signal of the application program, which is included in a download info indication, DII, transmitted through data carousel transmission using the broadcast wave, is detected as the designated event of the continuation range information,
wherein the control unit is configured to terminate the application program when a change of content of the broadcast program is detected as the designated event,
wherein the control unit is configured to terminate the application program when a change of content of data broadcast simultaneously executed with the broadcast program is detected as the designated event, and
wherein the control unit is configured to terminate the application program when a change of content of the application program is detected as the designated event.

## Patentansprüche

1. Empfangsvorrichtung (20), die Folgendes umfasst:
eine Empfangseinheit (212), die zum Empfangen von AV-Inhalt ausgelegt ist;
eine Fortdauerspanneninformationserfassungseinheit, die ausgelegt ist zum Erfassen von Fortdauerspanneninformationen zum Spezifizieren einer Spanne auf einer Zeitachse, in der eine Operation eines gleichzeitig mit dem AV-Inhalt ausgeführten Anwendungsprogramms fortgesetzt werden kann; und
eine Steuereinheit (234), die ausgelegt ist zum Beenden des ausgeführten Anwendungsprogramms basierend auf den Fortdauerspanneninformationen,
wobei der AV-Inhalt über eine Rundfunkwelle übertragen wird und es sich bei dem AV-Inhalt um ein Rundfunkprogramm handelt,
wobei die Fortdauerspanneninformationen Informationen beinhalten, die in über die Rundfunkwelle übertragenen vorbestimmten Informationen enthalten sind und zum Designieren eines vorbestimmten Ereignisses verwendet werden, anhand dessen es möglich ist, eine Fortdauerspanne einer Operation des Anwendungsprogramms zu spezifizieren,
wobei die Steuereinheit ausgelegt ist zum Beenden des ausgeführten Anwendungsprogramms, wenn ein Zwangsbeendigungssignal des Anwendungsprogramms, das in einer über eine zyklisch wiederholte Datenübertragung unter Verwendung der Rundfunkwelle übertragenen Downloadinformationsangabe, DII (Download Info Indication), enthalten ist, als das designierte Ereignis der Fortdauerspanneninformationen detektiert wird,
wobei die Steuereinheit ausgelegt ist zum Beenden des Anwendungsprogramms, wenn eine Änderung eines Inhalts des Rundfunkprogramms als das designierte Ereignis detektiert wird,
wobei die Steuereinheit ausgelegt ist zum Beenden des Anwendungsprogramms, wenn eine Änderung eines Inhalts eines gleichzeitig mit dem Rundfunkprogramm ausgeführten Datenrundfunks als das designierte Ereignis detektiert wird, und
wobei die Steuereinheit ausgelegt ist zum Beenden des Anwendungsprogramms, wenn eine Änderung eines Inhalts des Anwendungsprogramms als das designierte Ereignis detektiert wird.

2. Empfangsvorrichtung (20) nach Anspruch 1, wobei, wenn die Anwendungsprogramme ausgeführt werden, das Zwangsbeendigungssignal für jedes ausgeführte Anwendungsprogramm detektiert wird.

3. Empfangsvorrichtung (20) nach Anspruch 2, wobei die Steuereinheit (34) ausgelegt ist zum Beenden des ausgeführten Anwendungsprogramms in Zusammenhang mit dem Zwangsbeendigungssignal für jedes Anwendungsprogramm.

4. Empfangsvorrichtung (20) nach Anspruch 1, wobei die Steuereinheit (34) ausgelegt ist zum Beenden des ausgeführten Anwendungsprogramms, wenn ein Wert einer in einer über die Rundfunkwelle übertragenen Ereignisinformationstabelle, EIT, enthaltenen Ereigniskennung aktualisiert wird.

5. Empfangsvorrichtung (20) nach Anspruch 1, wobei die Steuereinheit (34) ausgelegt ist zum Beenden des ausgeführten Anwendungsprogramms, wenn ein Wert einer in einer über eine zyklisch wiederholte Datenübertragung unter Verwendung der Rundfunkwelle übertragenen DII enthaltenen Ereigniskennung für einen Datenrundfunk aktualisiert wird.

6. Empfangsvorrichtung (20) nach Anspruch 1,
wobei die Steuereinheit (34) ausgelegt ist zum Beenden des ausgeführten Anwendungsprogramms, wenn ein Wert einer in einer über eine zyklisch wiederholte Datenübertragung unter Verwendung der Rundfunkwelle übertragenen DII enthaltenen Ereigniskennung für eine Anwendung aktualisiert wird.

7. Empfangsvorrichtung (20) nach Anspruch 1,
wobei die Steuereinheit (34) ausgelegt ist zum Beenden des ausgeführten Anwendungsprogramms, wenn das Ereignis nicht designiert wird, und wenn eine Beendigung des ausgeführten Anwendungsprogramms angewiesen wird oder wenn der AV-Inhalt umgeschaltet wird.

8. Empfangsvorrichtung (20) nach einem der vorhergehenden Ansprüche,
wobei die Fortdauerspanneninformationen in Steuerinformationen zum Steuern einer Operation des Anwendungsprogramms enthalten sind und/oder als Argument einer Funktion zum Aktivieren des Anwendungsprogramms designiert sind und/oder als ein Parameter einer einheitlichen Ressourcenkennung, URI (Uniform Ressource Identifier), bei dem es sich um ein Argument einer Funktion zum Aktivieren des Anwendungsprogramms handelt, designiert sind.

9. Empfangsverfahren einer Empfangsvorrichtung (20), wobei das Verfahren Folgendes umfasst:
durch die Empfangsvorrichtung,
einen Schritt des Empfangens von AV-Inhalt;
einen Schritt des Erfassens von Fortdauerspanneninformationen zum Spezifizieren einer Spanne auf einer Zeitachse, in der eine Operation eines gleichzeitig mit dem AV-Inhalt ausgeführten Anwendungsprogramms fortgesetzt werden kann; und
einen Schritt des Beendens des ausgeführten Anwendungsprogramms basierend auf den Fortdauerspanneninformationen,
wobei der AV-Inhalt über eine Rundfunkwelle übertragen wird und es sich bei dem AV-Inhalt um ein Rundfunkprogramm handelt,
wobei die Fortdauerspanneninformationen Informationen beinhalten, die in über die Rundfunkwelle übertragenen vorbestimmten Informationen enthalten sind und zum Designieren eines vorbestimmten Ereignisses verwendet werden, anhand dessen es möglich ist, eine Fortdauerspanne einer Operation des Anwendungsprogramms zu spezifizieren,
wobei die Steuereinheit ausgelegt ist zum Beenden des ausgeführten Anwendungsprogramms, wenn ein Zwangsbeendigungssignal des Anwendungsprogramms, das in einer über eine zyklisch wiederholte Datenübertragung unter Verwendung der Rundfunkwelle übertragenen Downloadinformationsangabe, DII (Download Info Indication), enthalten ist, als das designierte Ereignis der Fortdauerspanneninformationen detektiert wird,
wobei die Steuereinheit ausgelegt ist zum Beenden des Anwendungsprogramms, wenn eine Änderung eines Inhalts des Rundfunkprogramms als das designierte Ereignis detektiert wird,
wobei die Steuereinheit ausgelegt ist zum Beenden des Anwendungsprogramms, wenn eine Änderung eines Inhalts eines gleichzeitig mit dem Rundfunkprogramm ausgeführten Datenrundfunks als das designierte Ereignis detektiert wird, und
wobei die Steuereinheit ausgelegt ist zum Beenden des Anwendungsprogramms, wenn eine Änderung eines Inhalts des Anwendungsprogramms als das designierte Ereignis detektiert wird.

10. Programm zum Veranlassen, dass ein Computer als Folgendes fungiert:
eine Empfangseinheit (20), die zum Empfangen von AV-Inhalt ausgelegt ist;
eine
Fortdauerspanneninformationserfassungseinheit, die ausgelegt ist zum Erfassen von Fortdauerspanneninformationen zum Spezifizieren einer Spanne auf einer Zeitachse, in der eine Operation eines gleichzeitig mit dem AV-Inhalt ausgeführten Anwendungsprogramms fortgesetzt werden kann; und
eine Steuereinheit (34), die ausgelegt ist zum Beenden des ausgeführten Anwendungsprogramms basierend auf den Fortdauerspanneninformationen,
wobei der AV-Inhalt über eine Rundfunkwelle übertragen wird und es sich bei dem AV-Inhalt um ein Rundfunkprogramm handelt,
wobei die Fortdauerspanneninformationen Informationen beinhalten, die in über die Rundfunkwelle übertragenen vorbestimmten Informationen enthalten sind und zum Designieren eines vorbestimmten Ereignisses verwendet werden, anhand dessen es möglich ist, eine Fortdauerspanne einer Operation des Anwendungsprogramms zu spezifizieren,
wobei die Steuereinheit ausgelegt ist zum Beenden des ausgeführten Anwendungsprogramms, wenn ein Zwangsbeendigungssignal des Anwendungsprogramms, das in einer über eine zyklisch wiederholte Datenübertragung unter Verwendung der Rundfunkwelle übertragenen Downloadinformationsangabe, DII (Download Info Indication), enthalten ist, als das designierte Ereignis der Fortdauerspanneninformationen detektiert wird,
wobei die Steuereinheit ausgelegt ist zum Beenden des Anwendungsprogramms, wenn eine Änderung eines Inhalts des Rundfunkprogramms als das designierte Ereignis detektiert wird,
wobei die Steuereinheit ausgelegt ist zum Beenden des Anwendungsprogramms, wenn eine Änderung eines Inhalts eines gleichzeitig mit dem Rundfunkprogramm ausgeführten Datenrundfunks als das designierte Ereignis detektiert wird, und
wobei die Steuereinheit ausgelegt ist zum Beenden des Anwendungsprogramms, wenn eine Änderung eines Inhalts des Anwendungsprogramms als das designierte Ereignis detektiert wird.

11. Übertragungsvorrichtung (10), die Folgendes umfasst:
eine Erzeugungseinheit, die ausgelegt ist zum Erzeugen von Fortdauerspanneninformationen zum Spezifizieren einer Spanne auf einer Zeitachse, in der eine Operation eines gleichzeitig mit einem AV-Inhalt ausgeführten Anwendungsprogramms fortgesetzt werden kann; und
eine Übertragungseinheit (118), die ausgelegt ist zum Übertragen der Fortdauerspanneninformationen,
wobei der AV-Inhalt über eine Rundfunkwelle übertragen wird,
wobei die Fortdauerspanneninformationen Informationen beinhalten, die in über die Rundfunkwelle übertragenen vorbestimmten Informationen enthalten sind und zum Designieren eines vorbestimmten Ereignisses verwendet werden, anhand dessen es möglich ist, eine Fortdauerspanne einer Operation des Anwendungsprogramms zu spezifizieren, und es sich bei dem AV-Inhalt um ein Rundfunkprogramm handelt,
wobei die Steuereinheit ausgelegt ist zum Beenden des ausgeführten Anwendungsprogramms, wenn ein Zwangsbeendigungssignal des Anwendungsprogramms, das in einer über eine zyklisch wiederholte Datenübertragung unter Verwendung der Rundfunkwelle übertragenen Downloadinformationsangabe, DII (Download Info Indication), enthalten ist, als das designierte Ereignis der Fortdauerspanneninformationen detektiert wird,
wobei die Steuereinheit ausgelegt ist zum Beenden des Anwendungsprogramms, wenn eine Änderung eines Inhalts des Rundfunkprogramms als das designierte Ereignis detektiert wird,
wobei die Steuereinheit ausgelegt ist zum Beenden des Anwendungsprogramms, wenn eine Änderung eines Inhalts eines gleichzeitig mit dem Rundfunkprogramm ausgeführten Datenrundfunks als das designierte Ereignis detektiert wird, und
wobei die Steuereinheit ausgelegt ist zum Beenden des Anwendungsprogramms, wenn eine Änderung eines Inhalts des Anwendungsprogramms als das designierte Ereignis detektiert wird.

12. Übertragungsverfahren einer Übertragungsvorrichtung (10), wobei das Verfahren Folgendes umfasst:
durch die Übertragungsvorrichtung,
einen Schritt des Erzeugens von Fortdauerspanneninformationen zum Spezifizieren einer Spanne auf einer Zeitachse, in der eine Operation eines gleichzeitig mit einem AV-Inhalt ausgeführten Anwendungsprogramms fortgesetzt werden kann; und
einen Schritt des Übertragens der Fortdauerspanneninformationen,
wobei der AV-Inhalt über eine Rundfunkwelle übertragen wird und es sich bei dem AV-Inhalt um ein Rundfunkprogramm handelt,
wobei die Fortdauerspanneninformationen Informationen beinhalten, die in über die Rundfunkwelle übertragenen vorbestimmten Informationen enthalten sind und zum Designieren eines vorbestimmten Ereignisses verwendet werden, anhand dessen es möglich ist, eine Fortdauerspanne einer Operation des Anwendungsprogramms zu spezifizieren,
wobei die Steuereinheit ausgelegt ist zum Beenden des ausgeführten Anwendungsprogramms, wenn ein Zwangsbeendigungssignal des Anwendungsprogramms, das in einer über eine zyklisch wiederholte Datenübertragung unter Verwendung der Rundfunkwelle übertragenen Downloadinformationsangabe, DII (Download Info Indication), enthalten ist, als das designierte Ereignis der Fortdauerspanneninformationen detektiert wird,
wobei die Steuereinheit ausgelegt ist zum Beenden des Anwendungsprogramms, wenn eine Änderung eines Inhalts des Rundfunkprogramms als das designierte Ereignis detektiert wird,
wobei die Steuereinheit ausgelegt ist zum Beenden des Anwendungsprogramms, wenn eine Änderung eines Inhalts eines gleichzeitig mit dem Rundfunkprogramm ausgeführten Datenrundfunks als das designierte Ereignis detektiert wird, und
wobei die Steuereinheit ausgelegt ist zum Beenden des Anwendungsprogramms, wenn eine Änderung eines Inhalts des Anwendungsprogramms als das designierte Ereignis detektiert wird.

13. Programm zum Veranlassen, dass ein Computer als Folgendes fungiert:
eine Erzeugungseinheit, die ausgelegt ist zum Erzeugen von Fortdauerspanneninformationen zum Spezifizieren einer Spanne auf einer Zeitachse, in der eine Operation eines gleichzeitig mit einem AV-Inhalt ausgeführten Anwendungsprogramms fortgesetzt werden kann; und
eine Übertragungseinheit (118), die ausgelegt ist zum Übertragen der Fortdauerspanneninformationen,
wobei der AV-Inhalt über eine Rundfunkwelle übertragen wird und es sich bei dem AV-Inhalt um ein Rundfunkprogramm handelt,
wobei die Fortdauerspanneninformationen Informationen beinhalten, die in über die Rundfunkwelle übertragenen vorbestimmten Informationen enthalten sind und zum Designieren eines vorbestimmten Ereignisses verwendet werden,
anhand dessen es möglich ist, eine Fortdauerspanne einer Operation des Anwendungsprogramms zu spezifizieren,
wobei die Steuereinheit ausgelegt ist zum Beenden des ausgeführten Anwendungsprogramms, wenn ein Zwangsbeendigungssignal des Anwendungsprogramms,
das in einer über eine zyklisch wiederholte Datenübertragung unter Verwendung der Rundfunkwelle übertragenen Downloadinformationsangabe, DII (Download Info Indication), enthalten ist, als das designierte Ereignis der Fortdauerspanneninformationen detektiert wird,
wobei die Steuereinheit ausgelegt ist zum Beenden des Anwendungsprogramms, wenn eine Änderung eines Inhalts des Rundfunkprogramms als das designierte Ereignis detektiert wird,
wobei die Steuereinheit ausgelegt ist zum Beenden des Anwendungsprogramms, wenn eine Änderung eines Inhalts eines gleichzeitig mit dem Rundfunkprogramm ausgeführten Datenrundfunks als das designierte Ereignis detektiert wird, und
wobei die Steuereinheit ausgelegt ist zum Beenden des Anwendungsprogramms, wenn eine Änderung eines Inhalts des Anwendungsprogramms als das designierte Ereignis detektiert wird.

## Revendications

1. Dispositif de réception (20), comprenant :
une unité de réception (212) configurée pour recevoir un contenu AV ;
une unité d'acquisition d'informations de plage de continuation configurée pour acquérir des informations de plage de continuation destinées à spécifier une plage sur un axe des temps dans laquelle une opération d'un programme d'application exécuté simultanément au contenu AV est susceptible de continuer ; et
une unité de commande (234) configurée pour arrêter le programme d'application en cours d'exécution sur la base des informations de plage de continuation,
le contenu AV étant transmis au moyen d'une onde de diffusion et le contenu AV consistant en un programme de diffusion,
les informations de plage de continuation comportant des informations contenues dans des informations prédéterminées transmises au moyen de l'onde de diffusion et servant à désigner un événement prédéterminé à partir duquel il est possible de spécifier une plage de continuation d'une opération du programme d'application,
l'unité de commande étant configurée pour arrêter le programme d'application en cours d'exécution lorsqu'un signal d'arrêt forcé du programme d'application, contenu dans une indication d'informations de téléchargement, notée DII, transmise au moyen d'une transmission par carrousel de données à l'aide de l'onde de diffusion, est détecté comme l'événement désigné des informations de plage de continuation,
l'unité de commande étant configurée pour arrêter le programme d'application lorsqu'une modification de contenu du programme de diffusion est détectée comme l'événement désigné,
l'unité de commande étant configurée pour arrêter le programme d'application lorsqu'une modification de contenu d'une diffusion de données exécutée simultanément au programme de diffusion est détectée comme l'événement désigné, et
l'unité de commande étant configurée pour arrêter le programme d'application lorsqu'une modification de contenu du programme d'application est détectée comme l'événement désigné.

2. Dispositif de réception (20) selon la revendication 1,
dans lequel, lorsque les programmes d'application sont exécutés, le signal d'arrêt forcé est détecté pour chaque programme d'application en cours d'exécution.

3. Dispositif de réception (20) selon la revendication 2,
dans lequel l'unité de commande (34) est configurée pour arrêter le programme d'application en cours d'exécution en association avec le signal d'arrêt forcé pour chaque programme d'application.

4. Dispositif de réception (20) selon la revendication 1,
dans lequel l'unité de commande (34) est configurée pour arrêter le programme d'application en cours d'exécution lorsqu'une valeur d'un identifiant d'événement contenu dans une table d'informations d'événements, notée EIT, transmise au moyen de l'onde de diffusion est actualisée.

5. Dispositif de réception (20) selon la revendication 1,
dans lequel l'unité de commande (34) est configurée pour arrêter le programme d'application en cours d'exécution lorsqu'une valeur d'un identifiant d'événement pour une diffusion de données contenu dans une DII transmise au moyen d'une transmission par carrousel de données à l'aide de l'onde de diffusion est actualisée.

6. Dispositif de réception (20) selon la revendication 1,
dans lequel l'unité de commande (34) est configurée pour arrêter le programme d'application en cours d'exécution lorsqu'une valeur d'un identifiant d'événement pour une application contenu dans une DII transmise au moyen d'une transmission par carrousel de données à l'aide de l'onde de diffusion est actualisée.

7. Dispositif de réception (20) selon la revendication 1,
dans lequel l'unité de commande (34) est configurée pour arrêter le programme d'application en cours d'exécution lorsque l'événement n'est pas désigné et lorsqu'une instruction est donnée d'arrêter le programme d'application en cours d'exécution ou lorsque le contenu AV est commuté.

8. Dispositif de réception (20) selon l'une quelconque des revendications précédentes,
dans lequel les informations de plage de continuation sont contenues dans des informations de commande destinées à commander une opération du programme d'application et/ou désignées comme un argument d'une fonction d'activation du programme d'application et/ou désignées comme un paramètre d'un identifiant uniforme de ressource, noté URI, constituant un argument d'une fonction d'activation du programme d'application.

9. Procédé de réception d'un dispositif de réception (20), le procédé comprenant :
par le dispositif de réception,
une étape de réception d'un contenu AV ;
une étape d'acquisition d'informations de plage de continuation destinées à spécifier une plage sur un axe des temps dans laquelle une opération d'un programme d'application exécuté simultanément au contenu AV est susceptible de continuer ; et
une étape d'arrêt du programme d'application en cours d'exécution sur la base des informations de plage de continuation,
le contenu AV étant transmis au moyen d'une onde de diffusion et le contenu AV consistant en un programme de diffusion,
les informations de plage de continuation comportant des informations contenues dans des informations prédéterminées transmises au moyen de l'onde de diffusion et servant à désigner un événement prédéterminé à partir duquel il est possible de spécifier une plage de continuation d'une opération du programme d'application,
l'unité de commande étant configurée pour arrêter le programme d'application en cours d'exécution lorsqu'un signal d'arrêt forcé du programme d'application, contenu dans une indication d'informations de téléchargement, notée DII, transmise au moyen d'une transmission par carrousel de données à l'aide de l'onde de diffusion, est détecté comme l'événement désigné des informations de plage de continuation,
l'unité de commande étant configurée pour arrêter le programme d'application lorsqu'une modification de contenu du programme de diffusion est détectée comme l'événement désigné,
l'unité de commande étant configurée pour arrêter le programme d'application lorsqu'une modification de contenu d'une diffusion de données exécutée simultanément au programme de diffusion est détectée comme l'événement désigné, et
l'unité de commande étant configurée pour arrêter le programme d'application lorsqu'une modification de contenu du programme d'application est détectée comme l'événement désigné.

10. Programme destiné à amener un ordinateur à fonctionner comme :
une unité de réception (20) configurée pour recevoir un contenu AV ;
une unité d'acquisition d'informations de plage de continuation configurée pour acquérir des informations de plage de continuation destinées à spécifier une plage sur un axe des temps dans laquelle une opération d'un programme d'application exécuté simultanément au contenu AV est susceptible de continuer ; et
une unité de commande (34) configurée pour arrêter le programme d'application en cours d'exécution sur la base des informations de plage de continuation,
le contenu AV étant transmis au moyen d'une onde de diffusion et le contenu AV consistant en un programme de diffusion,
les informations de plage de continuation comportant des informations contenues dans des informations prédéterminées transmises au moyen de l'onde de diffusion et servant à désigner un événement prédéterminé à partir duquel il est possible de spécifier une plage de continuation d'une opération du programme d'application,
l'unité de commande étant configurée pour arrêter le programme d'application en cours d'exécution lorsqu'un signal d'arrêt forcé du programme d'application, contenu dans une indication d'informations de téléchargement, notée DII, transmise au moyen d'une transmission par carrousel de données à l'aide de l'onde de diffusion, est détecté comme l'événement désigné des informations de plage de continuation,
l'unité de commande étant configurée pour arrêter le programme d'application lorsqu'une modification de contenu du programme de diffusion est détectée comme l'événement désigné,
l'unité de commande étant configurée pour arrêter le programme d'application lorsqu'une modification de contenu d'une diffusion de données exécutée simultanément au programme de diffusion est détectée comme l'événement désigné, et
l'unité de commande étant configurée pour arrêter le programme d'application lorsqu'une modification de contenu du programme d'application est détectée comme l'événement désigné.

11. Dispositif de transmission (10), comprenant :
une unité de génération configurée pour générer des informations de plage de continuation destinées à spécifier une plage sur un axe des temps dans laquelle une opération d'un programme d'application exécuté simultanément à un contenu AV est susceptible de continuer ; et
une unité de transmission (118) configurée pour transmettre les informations de plage de continuation,
le contenu AV étant transmis au moyen d'une onde de diffusion,
les informations de plage de continuation comportant des informations contenues dans des informations prédéterminées transmises au moyen de l'onde de diffusion et servant à désigner un événement prédéterminé à partir duquel il est possible de spécifier une plage de continuation d'une opération du programme d'application, et le contenu AV consistant en un programme de diffusion,
l'unité de commande étant configurée pour arrêter le programme d'application en cours d'exécution lorsqu'un signal d'arrêt forcé du programme d'application, contenu dans une indication d'informations de téléchargement, notée DII, transmise au moyen d'une transmission par carrousel de données à l'aide de l'onde de diffusion, est détecté comme l'événement désigné des informations de plage de continuation,
l'unité de commande étant configurée pour arrêter le programme d'application lorsqu'une modification de contenu du programme de diffusion est détectée comme l'événement désigné,
l'unité de commande étant configurée pour arrêter le programme d'application lorsqu'une modification de contenu d'une diffusion de données exécutée simultanément au programme de diffusion est détectée comme l'événement désigné, et
l'unité de commande étant configurée pour arrêter le programme d'application lorsqu'une modification de contenu du programme d'application est détectée comme l'événement désigné.

12. Procédé de transmission d'un dispositif de transmission (10), le procédé comprenant :
par le dispositif de transmission,
une étape de génération d'informations de plage de continuation destinées à spécifier une plage sur un axe des temps dans laquelle une opération d'un programme d'application exécuté simultanément à un contenu AV est susceptible de continuer ; et
une étape de transmission des informations de plage de continuation,
le contenu AV étant transmis au moyen d'une onde de diffusion et le contenu AV consistant en un programme de diffusion,
les informations de plage de continuation comportant des informations contenues dans des informations prédéterminées transmises au moyen de l'onde de diffusion et servant à désigner un événement prédéterminé à partir duquel il est possible de spécifier une plage de continuation d'une opération du programme d'application,
l'unité de commande étant configurée pour arrêter le programme d'application en cours d'exécution lorsqu'un signal d'arrêt forcé du programme d'application, contenu dans une indication d'informations de téléchargement, notée DII, transmise au moyen d'une transmission par carrousel de données à l'aide de l'onde de diffusion, est détecté comme l'événement désigné des informations de plage de continuation,
l'unité de commande étant configurée pour arrêter le programme d'application lorsqu'une modification de contenu du programme de diffusion est détectée comme l'événement désigné,
l'unité de commande étant configurée pour arrêter le programme d'application lorsqu'une modification de contenu d'une diffusion de données exécutée simultanément au programme de diffusion est détectée comme l'événement désigné, et
l'unité de commande étant configurée pour arrêter le programme d'application lorsqu'une modification de contenu du programme d'application est détectée comme l'événement désigné.

13. Programme destiné à amener un ordinateur à fonctionner comme :
une unité de génération configurée pour générer des informations de plage de continuation destinées à spécifier une plage sur un axe des temps dans laquelle une opération d'un programme d'application exécuté simultanément à un contenu AV est susceptible de continuer ; et
une unité de transmission (118) configurée pour transmettre les informations de plage de continuation,
le contenu AV étant transmis au moyen d'une onde de diffusion et le contenu AV consistant en un programme de diffusion,
les informations de plage de continuation comportant des informations contenues dans des informations prédéterminées transmises au moyen de l'onde de diffusion et servant à désigner un événement prédéterminé à partir duquel il est possible de spécifier une plage de continuation d'une opération du programme d'application, l'unité de commande étant configurée pour arrêter le programme d'application en cours d'exécution lorsqu'un signal d'arrêt forcé du programme d'application, contenu dans une indication d'informations de téléchargement, notée DII, transmise au moyen d'une transmission par carrousel de données à l'aide de l'onde de diffusion, est détecté comme l'événement désigné des informations de plage de continuation,
l'unité de commande étant configurée pour arrêter le programme d'application lorsqu'une modification de contenu du programme de diffusion est détectée comme l'événement désigné,
l'unité de commande étant configurée pour arrêter le programme d'application lorsqu'une modification de contenu d'une diffusion de données exécutée simultanément au programme de diffusion est détectée comme l'événement désigné, et
l'unité de commande étant configurée pour arrêter le programme d'application lorsqu'une modification de contenu du programme d'application est détectée comme l'événement désigné.
